(19) **Europäisches Patentamt**

**European Patent Office**

**Office européen des brevets**

(11) **EP 0 831 205 B1**

(12) **EUROPEAN PATENT SPECIFICATION**

(45) Date of publication and mention
of the grant of the patent:
**12.05.2004 Bulletin 2004/20**

(51) Int Cl.⁷: **F01K 25/00**, F01K 23/10,
F02C 3/28

(21) Application number: **97116360.5**

(22) Date of filing: **19.09.1997**

(54) **Power generation system capable of separating and recovering carbon dioxide**

Kraftwerk mit Trennung und Rückgewinnung von Kohlenstoffdioxid

Système de production d'énergie capable de la séparation et de la récupération du dioxyde de carbone

(84) Designated Contracting States:
**DE SE**

(30) Priority: **20.09.1996 JP 24946596**
**01.07.1997 JP 17538597**

(43) Date of publication of application:
**25.03.1998 Bulletin 1998/13**

(73) Proprietor: **KABUSHIKI KAISHA TOSHIBA**
**Kawasaki-shi, Kanagawa-ken 210-8572 (JP)**

(72) Inventors:
• **Ogawa, Takashi**
**Yokohama-shi, Kanagawa-ken (JP)**
• **Hori, Michio**
**Yokohama-shi, Kanagawa-ken (JP)**

• **Nakagaki, Takao**
**Tama-shi, Tokyo-to (JP)**
• **Fukuda, Masafumi**
**Urawa-shi, Saitama-ken (JP)**
• **Sasaki, Masakuni**
**Setagaya-ku, Tokyo-to (JP)**
• **Nishida, Takehito**
**Yokohama-shi, Kanagawa-ken (JP)**

(74) Representative: **Füchsle, Klaus, Dipl.-Ing. et al**
**Hoffmann Eitle,**
**Patent- und Rechtsanwälte,**
**Arabellastrasse 4**
**81925 München (DE)**

(56) References cited:
**EP-A- 0 453 059**        DE-A- 3 924 908
**GB-A- 1 298 434**

## Description

### BACKGROUND OF THE INVENTION

The present invention relates generally to a power generation system. More specifically, the invention relates to a power generation system, which can reform, decompose or gasify a fuel, such as methanol, to burn the fuel to generate electricity and which can separate and recover carbon dioxide emitted by power generation.

In conventional power generation systems, e. g., in thermal power plants, $SO_x$ and $NO_x$ contained in an exhaust gas have been removed as environmental measures. In recent years, the earth anathermal phenomenon due to emission of carbon dioxide, i.e., the atmospheric temperature rise due to the green house effect, has caused social problems on a global scale. In addition, if rain contains carbon dioxide emitted to atmosphere, acid rain having a bad influence on plants and so forth is produced to have a great influence on the yield of crop and so forth. Therefore, in thermal power generation, it is required to recover carbon dioxide, which is emitted by combustion, as large as possible without directly exhausting all the emitted carbon dioxide to atmosphere.

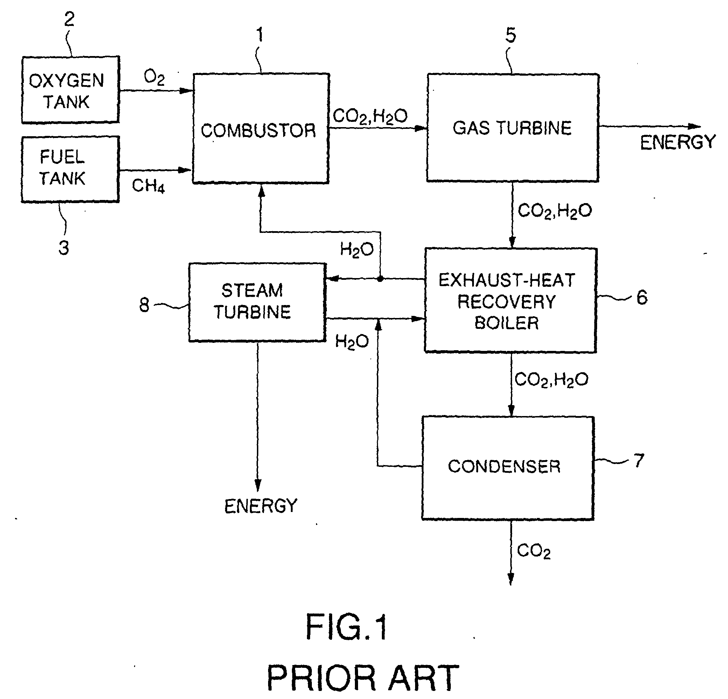

Referring to FIG. 1, an example of a conventional power generation system will be described below.

FIG. 1 is a block diagram of a conventional power generation system. In FIG. 1, oxygen and a fuel, such as methane, are directly supplied to a combustor 1 from an oxygen tank 2 and a fuel tank 3, respectively. In the combustor 1, the fuel is mixed with oxygen to be burned to generate a gas. The generated gas is supplied to a gas turbine 5. The gas turbine 5 causes a rotor to rotate by the gas supplied from the combustor 1, to generate electricity and to supply a spent gas to an exhaust-heat recovery boiler 6.

A part of steam exhausted from the exhaust-heat recovery boiler 6 is supplied to a condenser 7, and the rest of steam is recovered by a steam turbine 8 or the combustor 1. In addition, carbon dioxide supplied from the exhaust-heat recovery boiler 6, together with the part of steam, is supplied to the condenser 7. Water discharged from the steam turbine 8 and water discharged from the condenser 7 are supplied to the exhaust-heat recovery boiler 6. In the case of this example, since electric energies are generated by means of the gas turbine 5 and the steam turbine 8, the turbines 5 and 8 serve as power generating means.

With this construction, the operation of the conventional power generation system will be described below.

The combustor 1 receives oxygen from the oxygen tank 2, a fuel, such as methane, from the fuel tank 3 for storing the fuel therein, and steam from the exhaust-heat recovery boiler 6 to mix them to generate a mixed gas. The mixed gas is burned in the combustor 1. The burned mixed gas serves as a combustion gas of carbon dioxide and steam to be fed to the gas turbine 5. The combustion gas causes the gas turbine 5 to rotate the rotor to generate electric energy, which is supplied to consumers.

Exhaust gases, such as steam and carbon dioxide, exhausted from the gas turbine 5 are fed to the exhaust-heat recovery boiler 6. The exhaust-heat recovery boiler 6 utilizes the heat of the exhaust gas fed from the gas turbine 5, to heat water condensed by the condenser 7 and water discharged from the steam turbine 8 to convert the water into steam. The condenser 7 cools the exhaust gas such as steam carbon dioxide, which is supplied from the exhaust-heat recovery boiler 6 to condense the exhaust gas into water.

A part of the exhausted steam boiled by the heat of the exhaust-heat recovery boiler 6 is supplied to the combustor 1, and the rest of the steam is supplied to the steam turbine 8. The steam turbine 8 causes the supplied steam to rotate its rotor to take out electric energy from the steam. This energy is also supplied to electric power consumers.

Water, the energy of which has been used by the steam turbine 8 to be cooled, together with the condensed water fed from the condenser 7, is fed to the exhaust-heat recovery boiler 6. The rest of the condensed water discharged from the condenser 7, other than the condensed water fed to the exhaust-heat recovery boiler 6, is discharged to the outside of the power generation system. In addition, carbon dioxide fed from the exhaust-heat recovery boiler 6 to the condenser 7 is exhausted to the outside of the power generation system.

In the aforementioned conventional power generation system, there is a problem in that carbon particles and carbon monoxide are produced due to incomplete combustion since oxygen and the fuel are mixed in a theoretical ratio to be fed to the combustor to be directly burned therein. There is also a problem in that the fuel, which has not been burned, remains in the combustor. It is known that carbon monoxide produced due to incomplete combustion is harmful to human beings.

In addition, various by-products, such as alcohols, are produced during combustion. In particular, formaldehyde, which is one of by-products, is harmful to human beings. Since such by-products are produced, there is also a problem in that it is very difficult to separate and recover carbon dioxide by the condenser.

DE 39 24 908 A1 discloses a power generation system comprising the features of the preamble of claim 1.

### SUMMARY OF THE INVENTION

It is therefore an object of the present invention to eliminate the aforementioned problems and to provide a safe, long-lived power generation system by inhibiting the production of carbon particles and carbon monoxide, which remain due to incomplete combustion even if oxygen and a fuel supplied to a combustor in a theoretical ratio are burned therein, the remaining of the fuel, which has not been burned, and the production of by-products, such as alcohols, by combustion.

In order to accomplish the aforementioned and other objects, according to one aspect of the present invention, a power generation system comprises the features of claim 1.

With the aforementioned construction, according to the present invention, it is possible to inhibit carbon particles and carbon monoxide from being produced by incomplete combustion. It is also possible to inhibit a fuel, which has not been burned, from remaining and by-products, such as alcohols, from being deposited. Moreover, it is possible to increase the life of a power generation system, and it is also possible to improve the safety thereof.

BRIEF DESCRIPTION OF THE DRAWINGS

In the drawings:

FIG. 1 is a block diagram of a conventional power generation system;
FIG. 2 is a block diagram of the first preferred embodiment of a power generation system according to the present invention, which shows a basic concept of the present invention;
FIG. 3 is a block diagram of the second preferred embodiment of a power generation system according to the present invention:
FIG. 4 is a block diagram of the third preferred embodiment of a power generation system according to the present invention;
FIG. 5 is a block diagram of a principal part of the fourth preferred embodiment of a power generation system according to the present invention;
FIGS. 6A through 6C are block diagrams, each of which illustrates a principal part of the fifth preferred embodiment of a power generation system according to the present invention;
FIG. 7 is a block diagram of a principal part of the sixth preferred embodiment of a power generation system according to the present invention;
FIGS. 8A through 8D are block diagrams, each of which illustrates a principal part of the seventh preferred embodiment of a power generation, system according to the present invention;
FIGS. 9A and 9B are block diagrams, each of which illustrates a principal part of the eighth preferred embodiment of a power generation system according to the present invention;
FIG. 10 is a block diagram of a principal part of the ninth preferred embodiment of a power generation system according to the present invention;
FIGS. 11A through 11C are block diagrams, each of which illustrates a principal part of the tenth preferred embodiment of a power generation system according to the present invention;
FIGS. 12A through 12D are block diagrams, each of which illustrates a principal part of the eleventh preferred embodiment of a power generation system according to the present invention;
FIGS. 13A through 13D are block diagrams, each of which illustrates a principal part of the twelfth preferred embodiment of a power generation system according to the present invention;
FIGS. 14A through 14D are block diagrams, each of which illustrates a principal part of the thirteenth preferred embodiment of a power generation system according to the present invention;
FIG. 15 is a block diagram of a principal part of the fourteenth preferred embodiment of a power generation system according to the present invention;
FIG. 16 is a block diagram of a principal part of the fifteenth preferred embodiment of a power generation system according to the present invention;
FIG. 17 is a block diagram of a principal part of the sixteenth preferred embodiment of a power generation system according to the present invention;
FIG. 18 is a block diagram of a principal part of the seventeenth preferred embodiment of a power generation system according to the present invention;
FIG. 19 is a block diagram of a principal part of the eighteenth preferred embodiment of a power generation system according to the present invention;
FIG. 20 is a block diagram of a principal part of the nineteenth preferred embodiment of a power generation system according to the present invention;
FIG. 21 is a block diagram of a principal part of the twentieth preferred embodiment of a power generation system according to the present invention;
FIG. 22 is a block diagram of a principal part of the twenty-first preferred embodiment of a power generation system according to the present invention;
FIG. 23 is a block diagram of a principal part of the twenty-second preferred embodiment of a power generation system according to the present invention;
FIG. 24 is a block diagram of a principal part of the twenty-third preferred embodiment of a power generation system according to the present invention;
FIG. 25 is a block diagram of a principal part of the twenty-fourth preferred embodiment of a power generation system according to the present invention;
FIG. 26 is a block diagram of the twenty-fifth preferred embodiment of a power generation control system according to the present invention;
FIG. 27 is a flow chart of a method for controlling the recovery of carbon dioxide in the twenty-sixth preferred embodiment of a power generation system according to the present invention; and
FIG. 28 is a block diagram of a principal part of the twenty-seventh preferred embodiment of a power generation system according to the present invention.

## DESCRIPTION OF THE PREFERRED EMBODIMENTS

Referring now to the accompanying drawings, the preferred embodiments of a power generation system, according to the present invention, will be described in detail below.

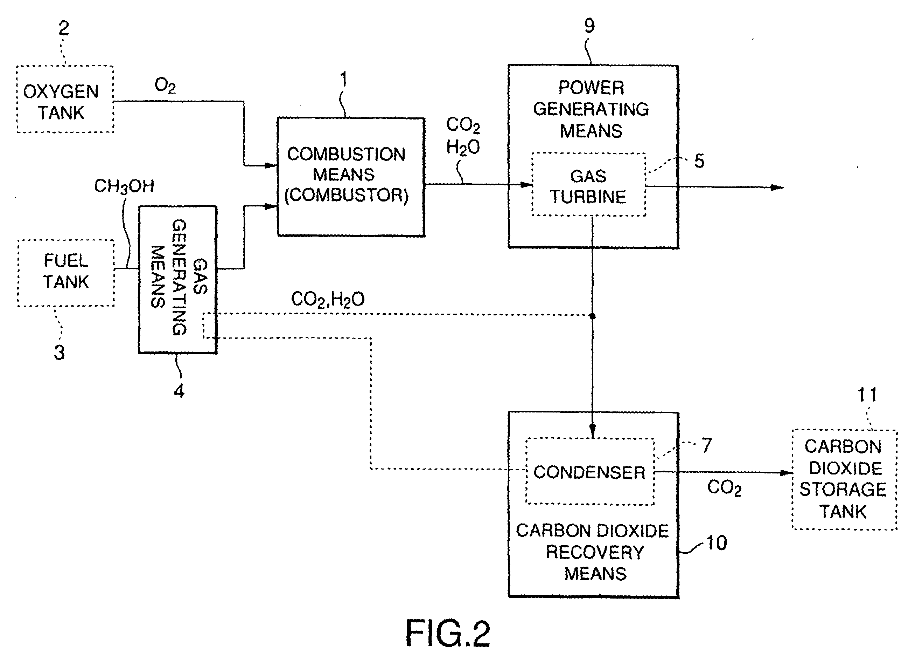

First, referring to the block diagram of FIG. 2, the basic concept of the first preferred embodiment of a power generation system, according to the present invention, will be described. As shown in FIG. 2, a power generation system comprises: gas generating means 4 for reforming, decomposing or gasifying a fuel supplied from fuel supply means, such as a fuel tank 3, to generate a gas containing at least hydrogen; combustion means 1, such as a combustor, for receiving a fluid containing the gas supplied from the gas generating means 4, and a fluid containing, as a main component, a compound containing at least one of oxygen supplied from oxygen supply means, such as an oxygen tank 2, carbon atoms, hydrogen atoms and oxygen atoms, to burn these fluids; power generating means 9 for generating electricity using the fluids supplied from the combustion means 1; and carbon dioxide recovery means 10 for recovering at least a part of carbon dioxide from the fluids exhausted from the power generating means 9. Similar to the conventional power generation system shown in FIG. 1, the power generating means 9 may comprise, e.g., a gas turbine 5. The carbon dioxide recovery means 10 may comprise, e.g., a condenser 7. If necessary, carbon dioxide recovered by the carbon dioxide recovery means 10 is stored in a carbon dioxide storage tank 11 and processed so as not to be exhausted to atmosphere.

The power generation system shown in FIG. 2, which serves as a basic concept of the present invention, contains the gas generating means 4 and the carbon dioxide recovery means 10. At this point, the power generation system shown in FIG. 2 is different from the conventional power generation system shown in FIG. 1. The carbon dioxide recovery means 10 may include the condenser 7 which is the same as that of the conventional power generation system. However, carbon dioxide ($CO_2$) and steam ($H_2O$) are supplied to the condenser 7, directly or via the gas generating means, from the power generating means 9, although carbon dioxide ($CO_2$) and steam ($H_2O$) are supplied to the condenser 7 via the exhaust heat recovery boiler 6 in the conventional power generation system shown in FIG. 1. Also at this point, both systems are different.

Furthermore, if the recovered carbon dioxide may be recycled in a circulating cycle of the power generation system if possible. Alternatively, the recovered carbon dioxide may be recycled as a secondary product in other industries by liquefying or solidifying (dry ice) the recovered carbon dioxide by cooling. In particular, the solidified carbon dioxide can be produced as a coolant or the like on a commercial basis.

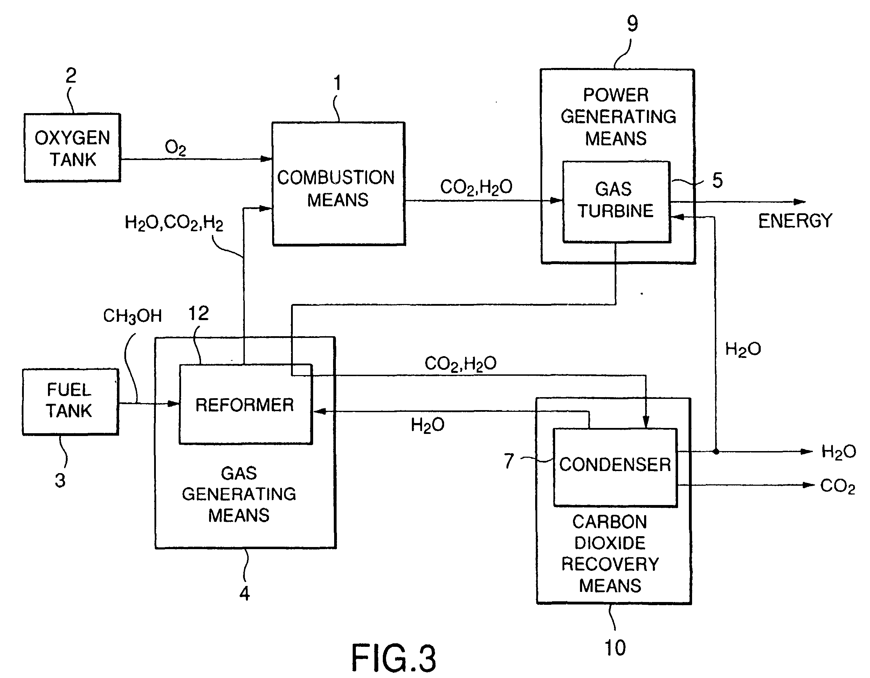

Referring to FIG. 3, the second preferred embodiment of a power generation system, according to the present invention, will be described below.

FIG. 3 is a block diagram of the second preferred embodiment of a power generation system according to the present invention. In the second preferred embodiment, a power generation system is provided with a reformer 12 serving as the gas generating means 4. At this point, the second preferred embodiment is constructed so as to have a concrete construction in comparison with the first preferred embodiment. The carbon dioxide recovery means 10 comprises a condenser 7. The condenser 7 recovers carbon dioxide and cools steam to generate water ($H_2O$). A part of the generated water is discharged, and the rest thereof is circulated to a gas turbine 5 to be recycled.

The combustor 1 is connected to an oxygen tank 2 for storing oxygen therein, the reformer 12 (a gas generating section 4) for reforming a fuel of a carbon compound, such as methanol, to generate a reformed gas, and a gas turbine 5 (a power generation section) for taking out energy from a high-temperature gas. The reformed gas includes at least hydrogen, or hydrogen and carbon dioxide. The reformer 12 is provided with a fuel tank 3 for storing therein a fuel such as methanol. Combustion gas exhausted from the combustor 1 is fed to the reformer 12 via the gas turbine 5.

The reformer 12 feeds a reformed gas, such as hydrogen which is obtained by reforming a fuel gas such as methanol, to the combustor 1, and carbon dioxide and steam to the condenser 7 (a carbon dioxide recovery section 10). The condenser 7 separates steam and carbon dioxide, which are fed from the reformer 12. Then, the condenser 7 discharges a part of condensed water to the reformer 12 and the rest of the condensed water to the outside of the power generation system. The separated carbon dioxide is recovered. The recovered carbon dioxide is liquefied.

With this construction, the operation of the second preferred embodiment of a power generation system, according to the present invention, will be described below.

To the reformer 12, methanol serving as a fuel is supplied from the fuel tank 3, and water is supplied from the condenser 7. The ratio of the feed rates of methanol to water (methanol : water) is 1 : 2.

In the reformer 12, the chemical reaction expressed by the following formula (I) occurs to generate hydrogen and carbon dioxide.

$$CH_3OH + H_2O \rightarrow 3H_2 + CO_2 \qquad (1)$$

Hydrogen and carbon dioxide obtained by the aforementioned reaction are supplied to the combustor 1 to required amounts. Simultaneously, a part of unreacted excessive water, together with hydrogen and carbon dioxide, is also fed to the combustor 1. At the same time that hydrogen, carbon dioxide and steam are fed from the reformer 12 to the combustor 1, oxygen (usually air) is fed from the oxygen tank 2 to the combustor 1.

Oxygen supplied from the oxygen tank 2, and hydrogen, carbon dioxide and steam supplied from the reformer 12 are mixed in the combustor 1 to be burned therein. The combustion gases, such as steam and carbon dioxide, burned in the combustor 1 are expanded. These combustion gases are fed to the gas turbine 5 to generate energy (electric power), which is taken out.

Thereafter, steam and carbon dioxide, which are exhaust gases from the gas turbine 5, are fed to the reformer 12. Since these exhaust gases have a very high temperature, the exhaust gases are used in the gas generating means 4 as heat sources for allowing a reforming reaction in the reformer 12 and for vaporizing steam or methanol. Steam and carbon dioxide supplied from the gas turbine 5 are fed to the condenser 7 after the heat thereof is absorbed.

The condenser 7 separates carbon dioxide from steam. The separated carbon dioxide is fed to the carbon dioxide recovery section 10. In the carbon dioxide recovery section 10, the recovered carbon dioxide is liquefied to be recovered so as not to be exhausted to the outside. A part of the steam separated from carbon dioxide is condensed into a condensed water, which is supplied to the reformer 12 to be used again, and excessive steam is exhausted to the outside of the power generation system.

In the second preferred embodiment as described above, since the carbon component in the fuel gas is changed into carbon dioxide, it is possible to inhibit carbon particles and carbon monoxide from being produced due to incomplete combustion, so that it is possible to operate the power generation system for a long term.

In addition, the combustible range of hydrogen is in the range of from 4 to 75 (vol%), which is wider than the combustible range of 5 to 15 (vol%) of methane gas, the combustible range of 2.1 to 9.5 (vol%) of propane gas and the combustible range of 6 to 36 (vol%) of methanol. The burning rate is 291 (cm/s), which is far greater than the burning rate of 37 (cm/s) of methane gas, the burning rate of 43 (cm/s) of propane gas and the burning rate of 55 (cm/s) of methanol. Therefore, hydrogen is relatively difficult to cause incomplete combustion so as not to produce unburned fuel residues, so that the power generation system has a long life.

Moreover, since the fuel is changed to hydrogen and carbon dioxide, the production of by-products such as alcohols, e.g., formaldehyde, is inhibited. Therefore, components harmful to human beings are not produced, so that the safety of the power generation system can be improved. In addition, it is possible to prevent carbon dioxide, which produce acid rain to deteriorates the global environment, from being exhausted to atmosphere.

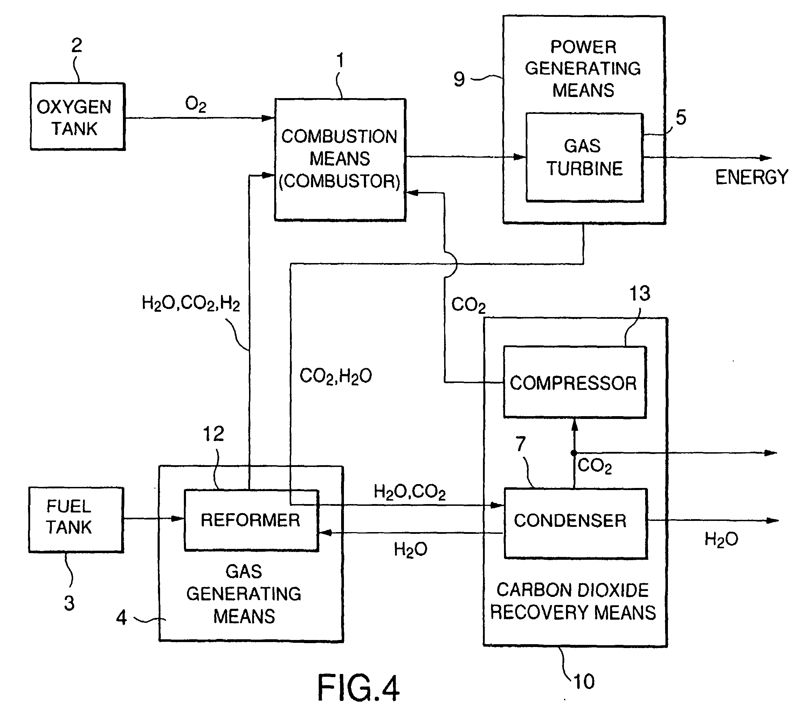

Referring to FIG. 4, the third preferred embodiment of a power generation system, according to the present invention, will be described below.

In this preferred embodiment, a compressor 13 is provided between a condenser 7 and a combustor 1, and carbon dioxide supplied from the condenser 7 is recovered to be supplied to the combustor 1 after compression.

In the block diagram of FIG. 4, which illustrates the third preferred embodiment of a power generation system, the combustor 1 is connected to: an oxygen tank 2 for storing oxygen therein; a reformer 12 (gas generating means 4) for reforming a fuel of a carbon compound, such as methanol, to generate a reformed gas; a compressor 13 for compressing carbon dioxide; and a gas turbine (power generating means 9) for taking energy out of a high-temperature gas. The reformed gas contains at least hydrogen, or hydrogen and carbon dioxide. To the reformer 12, a fuel is supplied from a fuel tank 3 for storing therein a fuel, such as methanol. The combustion gas supplied from the combustor 1 is fed to the reformer 12 via the gas turbine 5.

From the reformer 12, a reformed gas, such as hydrogen which is obtained by reforming the combustion gas such as methanol, is fed to the combustor 1, and carbon dioxide and hydrogen fed from the gas turbine 5 are fed to the condenser 7. The condenser 7 (the carbon dioxide recovery means 10) separates steam and carbon dioxide which are fed from the reformer 12. A part of the condensed water is fed to the reformer 12, and the rest of water is discharged. The separated carbon dioxide is fed to the compressor 13. A part of the carbon dioxide fed to the compressor 13 is compressed, and then, fed to the combustor 1. The rest of carbon dioxide is recovered. The recovered carbon dioxide is liquefied to be stored.

With this construction, the operation of the third preferred embodiment of a power generation system, according to the present invention, will be described below.

To the reformer 12, methanol serving as a fuel is supplied from the fuel tank 3, and water is supplied from the condenser 7. The ratio of the feed rates of methanol to water (methanol : water) is 1 : 2. In the reformer 12, the chemical reaction expressed by the following formula (I) occurs to generate hydrogen and carbon dioxide.

$$CH_3OH + H_2O \rightarrow 3H_2 + CO_2 \qquad (1)$$

Hydrogen and carbon dioxide obtained by such a reaction are supplied to the combustor 1 to required amounts, and a part of unreacted excessive water (steam) is also fed to the combustor 1. To the combustor 1, hydrogen, carbon dioxide and steam are fed from the reformer 12, and oxygen (usually air) is fed from the oxygen tank 2. Also, carbon dioxide is supplied from the compressor 4 to the combustor 1.

The oxygen supplied from the oxygen tank 2, the hydrogen, carbon dioxide and steam supplied from the reformer 12, and the carbon dioxide supplied from the compressor 13 are mixed in the combustor 1 to be burned therein. The combustion gas of steam and carbon dioxide burned in the combustor 1 is expanded. This combustion gas is fed to the gas turbine 5 to generate energy (electric power), which is taken out.

Thereafter, steam and carbon dioxide, which are exhaust gases from the gas turbine 5, are fed to the reformer 12. Since these exhaust gases have a very high temperature, these gases serve as heat sources for allowing a reforming reaction in the reformer 12 and for vaporizing water or methanol. Steam and carbon dioxide exhausted from the gas turbine 5 are fed to the condenser 7 after the heat thereof is absorbed in the reformer 12. The condenser 7 separates carbon dioxide from steam. A part of the separated carbon dioxide is fed to the compressor 13 to be compressed therein, and then, fed to the combustor 1. The rest of the carbon dioxide is liquefied to be recovered. Therefore, the carbon dioxide is not exhausted to the outside of the power generation system, so that carbon dioxide is not emitted to atmosphere. A part of the steam separated from carbon dioxide is condensed into a condensed water to be supplied to the reformer 12, and the rest of the steam is exhausted to the outside of the power generation system.

In the third preferred embodiment as described above, since the carbon components in the fuel gas are changed into carbon dioxide, it is possible to inhibit carbon particles and carbon monoxide from being produced due to incomplete combustion, so that it is possible to operate the power generation system for a long term.

In addition, the combustible range of hydrogen is in the range of from 4 to 75 (vol%), which is wider than the combustible range of from 5 to 15 (vol%) of the methane gas, the combustible range of from 2.1 to 9.5 (vol%) of propane gas and the combustible range of from 6 to 36 (vol%) of methanol. The burning rate of hydrogen is 291 (cm/s), which is far greater than the burning rate of 37 (cm/s) of methane gas, the burning rate of 43 (cm/s) of propane gas and the burning rate of 55 (cm/s) of methanol. Therefore, hydrogen is relatively difficult to cause incomplete combustion so as to inhibit the production of unburned fuel residues, so that the power generation system has a long life.

Moreover, since the fuel is changed to hydrogen and carbon dioxide, the production of by-products such as alcohols, e.g., formaldehyde, is inhibited. Therefore, the safety of the power generation system can be improved since it is safe for human beings. In addition, at least a part of the carbon dioxide recovered by the condenser 7 is supplied to the combustion chamber 1 via the compressor 13, so that it is possible to prevent carbon dioxide, which produces acid rain and causes the earth anathermal phenomenon to deteriorate the global environment, from being exhausted to atmosphere. Thus, it is possible to increase the quantity of energy taken out of the gas turbine 5.

Furthermore, the present invention should not be limited to the power generation systems in the first through third preferred embodiment, and it should be appreciated that the invention can be embodied in various ways without departing from the principle of the invention. For example, the water separated by the carbon dioxide recovery section to be discharged to the outside of the power generation system may be used for cooling the gas generation section, the combustor and the power generating means. In addition, sea water may be used as a heat sink for cooling the fluid supplied from the combustor to the carbon dioxide recovery section. Moreover, a part of the carbon dioxide fed from the compressor 13 may be used for cooling the power generating means 9.

Furthermore, according to the present invention, a power generation system is characterized in that a fuel is gasified to be supplied to a combustor in order to reform and decompose the fuel, and carbon dioxide supplied from power generating means is recovered in a circulating cycle of the power generation system to inhibit carbon dioxide from being emitted to atmosphere. The present invention may include various modifications having the aforementioned characteristics. In order to disclose such various modifications, a principal part of the fourth through twenty-fourth preferred embodiment of a power generation system, according to the present invention, will be described below.

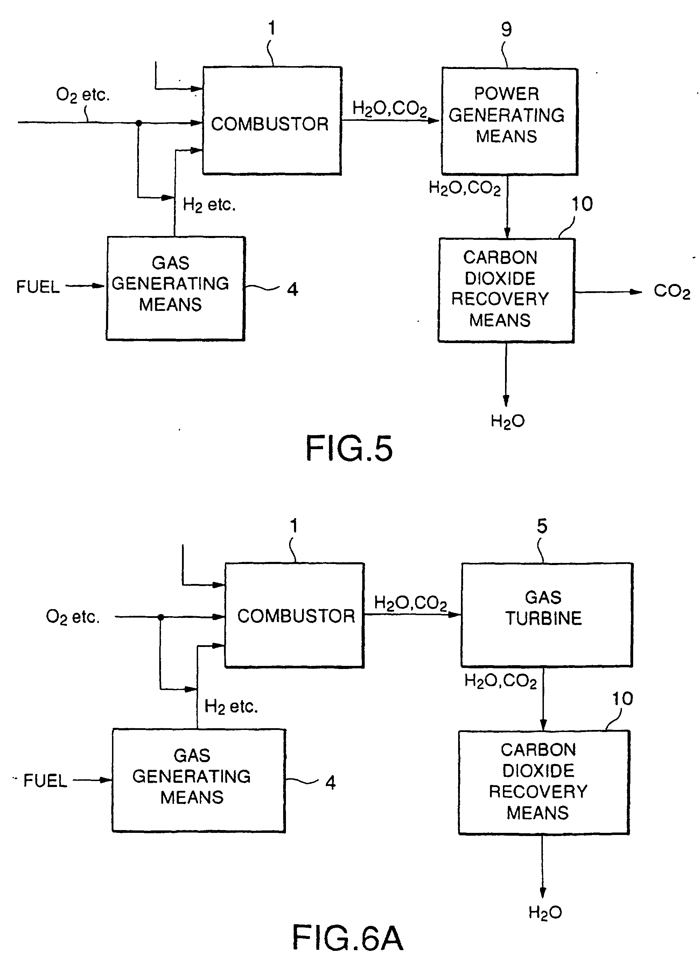

FIG. 5 is a block diagram of a principal part of the fourth preferred embodiment of a power generation system according to the present invention. In FIG. 5, at least a part of a fuel stored in a fuel tank (not shown) is supplied to gas generating means 4. In the gas generating means 4, a gas containing at least hydrogen is produced from the fuel. A fluid containing the gas exhausted from the gas generating means is supplied to a combustor 1. In addition, a fluid containing, as a main component, oxygen or a compound containing carbon atom(s) and/or hydrogen atom(s) and/or oxygen atom(s) is supplied to the combustor 1. Although the oxygen supplied to the combustor 1 may be liquid or gas, the oxygen is preferably liquid in a case where it is stored. In addition, the oxygen contained in the fluid, which is supplied to the combustor 1, may be oxygen generated by electrolyzing water, or oxygen generated by vapor-phase separating air into nitrogen and oxygen. This method is called as a membrane separating method or an osmosis refrigeration method.

As shown in FIG. 4, the fluid containing the gas exhausted from the gas generating means 4, and the fluid containing, as a main component, oxygen or a compound of carbon atom(s) and/or hydrogen atom(s) and/or oxygen atom(s), may be mixed in the combustor 1 or mixed before being supplied to the combustor 1. The high-temperature fluid supplied from the combustor 1 is introduced into power generating means 9. The power generating means 9 generates electricity by expanding the introduced high-temperature fluid in the power generating means 9. The fluid supplied from the power generating means 9 is supplied to the carbon dioxide recovery means 10. At least a part of carbon dioxide contained in the fluid, which is exhausted from the power generating means 9, is recovered by the carbon dioxide recovery means 10. The power generation system comprises the gas generating means 4, the combustor 1, the power generating means 9 and the carbon dioxide recovery means 10.

The fuel supplied to the gas generating means 4 is a compound containing carbon and hydrogen. For example, it may contain at least one of methanol, ethanol, methane, ethane, propane, butane, dimethyl ether, petroleum, carbon monoxide and formic acid. In particular, methanol can generate a gas containing at least hydrogen at a temperature of about 300°C which is a relatively low temperature in power plants. In a case where a gas containing hydrogen is generated from methane, a temperature of about 900°C is required.

In the gas generating means 4, a gas containing hydrogen is generated by allowing a shift-reaction (reforming) of the aforementioned fuel, or by decomposing or gasifying the aforementioned fuel. For example, if the fuel is methanol, a gas containing hydrogen is generated by the reforming reaction or decomposition. If the fuel is coal, it is gasified to generate carbon monoxide, and the shift reaction of the generated carbon monoxide is allowed to generate a gas containing hydrogen.

The chemical formulae of the reforming reaction and decomposition when the fuel is methanol, and the chemical formula of the shift reaction when the fuel is carbon monoxide are as follows.

i) Methanol:

Reforming Reaction:

$$CH_3OH + H_2O \rightarrow 3H_2 + CO_2 \qquad (1)$$

Decomposition:

$$CH_3OH \rightarrow 2H_2 + CO \qquad (2)$$

ii) Carbon Monoxide:

$$CO + H_2O \rightarrow H_2 + CO_2 \qquad (3)$$

When the fuel is methanol, the gases supplied from the gas generating means 4 are hydrogen and carbon dioxide (reforming reaction). The hydrogen and carbon dioxide generated by the gas generating means 4 are supplied to the combustor 1. The gas generated by the gas generating means 4 may contain at least hydrogen. When the fuel is methanol, hydrogen and carbon dioxide are supplied to the combustor 1. The hydrogen and carbon dioxide generated by the gas generating means 4 may be mixed with water or oxygen in a storage tank (not shown) before being supplied to the combustor 1. As mentioned above, water or steam may be directly supplied to the combustor 1 even if it is not mixed with the gas generated by the gas generating means 4 before being supplied to the combustor 1.

In the combustor 1, the hydrogen and carbon dioxide generated by the gas generating means 4, and the fluid containing, as a main component, oxygen or a compound containing carbon atom(s) and/or oxygen atom(s) and/or hydrogen atom(s) are burned. Also in a case where water or steam is mixed with hydrogen and oxygen supplied to the combustor 1, it is burned with oxygen.

When hydrogen, carbon dioxide and oxygen are burned, a fluid containing carbon dioxide and steam is generated in the combustor 1. Also in a case where hydrogen, carbon dioxide and oxygen, and water or steam are burned, carbon dioxide and steam are generated. The carbon dioxide and steam supplied from the combustor 1 are supplied to the power generating means 9 to generate electricity.

The carbon dioxide and steam supplied from the power generating means 9 are fed to the carbon dioxide recovery means 10. In the carbon dioxide recovery means 10, the steam is liquefied, i.e., condensed, to be separated into a gas and a liquid, specifically into carbon dioxide and water, and the carbon dioxide being a gas is recovered. The processes for separating steam into a gas and a liquid contain chemisorption processes, physical absorption processes, absorption processes, membrane separation processes and so forth. The chemisorption processes contain, e.g., the Alkanol amine process and the hot potassium carbonate process.

As described above, in the fourth preferred embodiment, since most of carbon atoms contained in the fuel are changed to carbon dioxide, it is possible to inhibit carbon particles and carbon monoxide from being generated due to incomplete combustion. Therefore, it is possible to increase the life of the power generation system by inhibiting carbon atoms from being deposited, and it is possible to provide a power generation system suitable for a favorable global environment by inhibiting carbon monoxide from being generated.

In addition, the combustible range of hydrogen generated by the gas generating means 4 is in the range of from 4 to 75 (vol%), which is wider than 5 to 15 (vol%) of the methane gas, 2.1 to 9.5 (vol%) of propane gas and 6 to 36 (vol%) of methanol. Moreover, the burning rate of hydrogen is 291 (cm/s), which is far greater than 37 (cm/s) of methane gas, 43 (cm/s) of propane gas and 55 (cm/s) of methanol. Therefore, since hydrogen is relatively difficult to cause incomplete combustion, it is possible to inhibit unburned fuel residues from being produced, so that the power generation system can have a long life.

Since the fuel is changed to at least hydrogen and carbon dioxide by the gas generating means 4, the production of by-products, such as alcohols, e.g., formaldehyde, is inhibited. Therefore, the safety of the power generation system can be improved since it is safe for human beings.

In addition, since the fluid supplied by the combustor 1 consists of carbon dioxide and steam (or water), the vapor-liquid separation of carbon dioxide from water is easily carried out, so that it is possible to improve the separation efficiency. It is also possible to decrease the costs and size of the carbon dioxide recovery means 10.

Referring to FIGS. 6A through 6C, the construction and operation of the fifth preferred embodiment of a power generation system, according to the present invention, will be described below. In the undermentioned preferred embodiments, the same reference numbers are used for the same elements as those in the first preferred embodiment, and the duplicated descriptions are omitted. The feature of the fifth preferred embodiment is that power generating means 9 comprises a gas turbine 5 and/or a steam turbine 8.

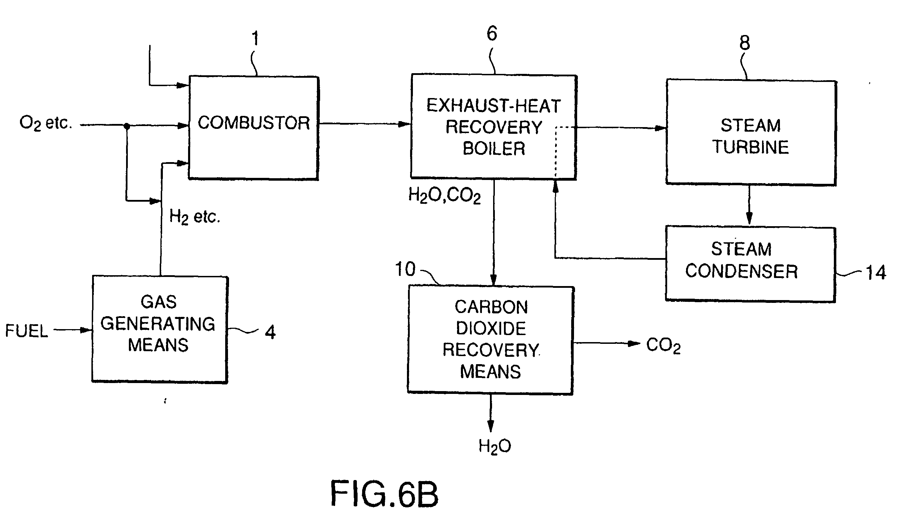

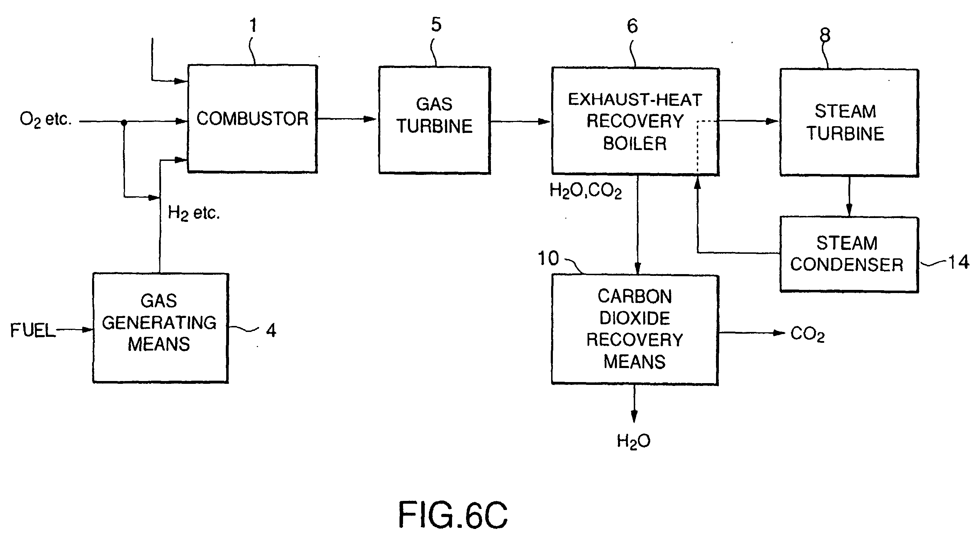

FIGS. 6A through 6C are block diagrams, each of which illustrates a principal part of the fifth preferred embodiment of a power generation system according to the present invention, wherein the power generating means 9 is a gas turbine 5 in FIG. 6A, a steam turbine B in FIG. 6B, and a combined system of the gas turbine 5 and the steam turbine 8 in FIG. 6C.

In FIG. 6A, the power generating means 9 is the gas turbine 5. A fluid supplied from the combustor 1 is introduced into the gas turbine 5 to generate electricity.

In FIG. 6B, the power generating means 9 is the steam turbine 8. Steam (a working fluid) supplied to the steam turbine 8 is generated using the heat of a fluid exhausted from the combustor 1. Specifically, an exhaust-heat recovery boiler 6 is provided between the combustor 1 and carbon dioxide recovery means 10. Water is heated by the heat of the fluid supplied from the combustor 1 to generate steam. The generated steam is introduced into the steam turbine 8 as a working fluid to generate electricity. The fluid supplied from the steam turbine 8 is condensed by means of a steam condenser 14 to be supplied to the exhaust-heat recovery boiler 6 again.

In FIG. 6C, the power generating means 6 comprises a combined system using the gas turbine 5 and the steam turbine 8. The fluid supplied from the combustor 1 is introduced into the gas turbine 5 to generate electricity. When the fluid exhausted from the gas turbine 5 passes through the exhaust-heat recovery boiler 6, the heat exchange is carried out. The heat of the fluid supplied from the gas turbine 5 is used for generating steam, which is introduced into the steam turbine 8, by means of the exhaust-heat recovery boiler 6. The steam generated by heating water by the heat exchange is introduced into the steam turbine 8 to generate electricity.

The power generating means 9 may be any one of constructions for generating electricity, such as the gas turbine 5 and the steam turbine 8. For example, the power generating means 9 may be a thermoelectric generator.

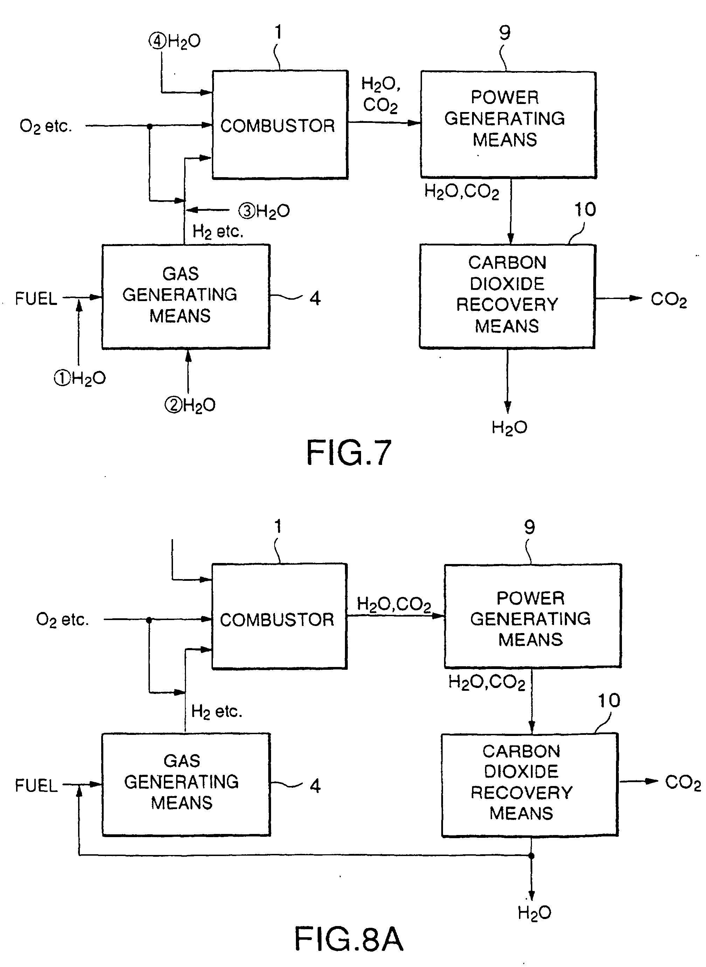

Referring to FIG. 7, the construction and operation of the sixth preferred embodiment of a power generation system, according to the present invention, will be described below.

FIG. 7 is a block diagram of a principal part of the sixth preferred embodiment of a power generation system, according to the present invention, which includes a water or steam receiving portion in addition to the power generation system. A fuel or a gas containing at least hydrogen may be mixed with water or steam at any one or more of the following four locations. Water and steam is stored in a storage portion (not shown) or the like.

① A fuel is supplied to gas generating means 4, the fuel is mixed with water or steam.
② A fuel is supplied to gas generating means 4, and water or steam is also supplied to the gas generating means 4. In the gas generating means 4, the fuel is mixed with the water or steam.
③ Before a gas containing hydrogen supplied from gas generating means 4 is supplied to a combustor 1, it is mixed with water or steam. The mixed fluid contains the gas supplied from the gas generating means 4.
④ A gas containing at least hydrogen is supplied to a combustor 1, and water or steam is also supplied to the combustor 1. In the combustor 1, the fuel is mixed with water or steam.

At any one of the aforementioned ① - ④ or the combination thereof, a fuel or a gas containing at least hydrogen may be mixed with water or steam, may be.

As mentioned above, in the sixth preferred embodiment, it is possible to supply water or steam by mixing a fuel with water or steam when the fuel is insufficient in the combustor 1. It is also possible to increase the generated energy by increasing the quantity of fluid supplied to the gas turbine 5. Moreover, excessive heat produced by combustion in the combustor 1 can be removed to cool the combustor 1 by water or steam.

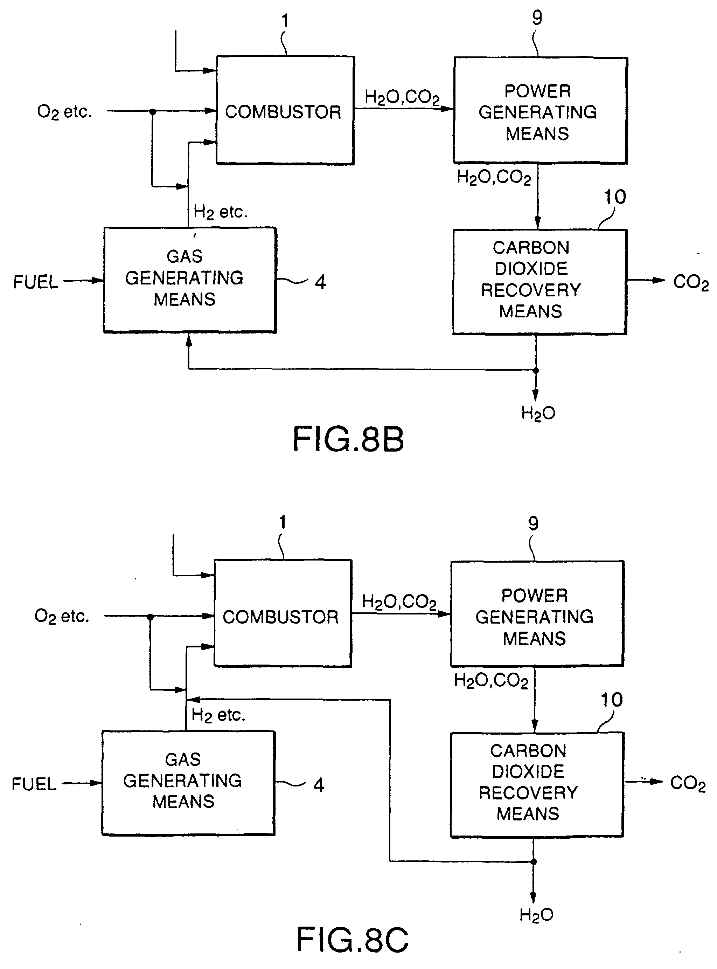

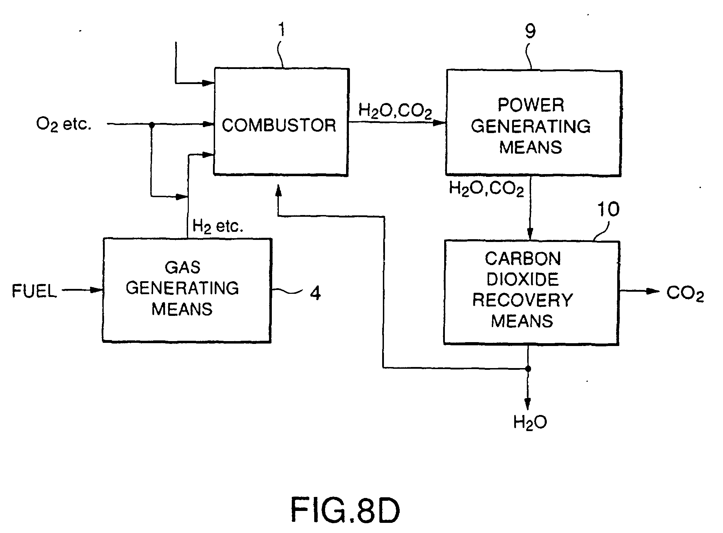

Referring to FIGS. 8A through 8D, the seventh preferred embodiment of a power generation system, according to the present invention, will be described below.

FIGS. 8A through 8D are block diagrams, each of which illustrates a principal part of the seventh preferred embodiment of a power generation system according to the present invention. In this preferred embodiment, at least a part of water or steam recovered by carbon dioxide recovery means 10 is supplied. In this preferred embodiment, various modifications of the sixth preferred embodiment of the power generation system shown in FIG. 7 are described.

In FIG. 7, a fuel or a gas containing at least hydrogen is mixed with water or steam stored in a storage portion without circulating water or steam generated in a power generation system. On the other hand, in FIGS. 8A through 8D, at least a part of water or steam generated in a power generation system, i.e., recovered by carbon dioxide recovery means 10, is mixed with a fuel supplied to gas generating means 4, or with a gas containing at least hydrogen supplied to a combustor 1. The supplied locations are the same as those of FIG. 7.

A fuel or a gas containing at least hydrogen may be mixed with water or steam at any one or more of the following four locations.

① A fuel is supplied to gas generating means 4, the fuel is mixed with water or steam.
② A fuel is supplied to gas generating means 4, and water or steam is also supplied to the gas generating means 4. In the gas generating means 4, the fuel is mixed with the water or steam.
③ Before a gas containing hydrogen exhausted from gas generating means 4 is supplied to a combustor 1, it is mixed with water or steam. The mixed fluid contains the gas exhausted from the gas generating means 4.
④ A gas containing at least hydrogen is supplied to a combustor 1, and water or steam is also supplied to the combustor 1. In the combustor 1, the fuel is mixed with water or steam.

A fuel or a gas containing at least hydrogen may be mixed with water or steam at any one or more of the aforementioned locations ① - ④ .

As mentioned above, in the seventh preferred embodiment, it is possible to supply water or steam by mixing a fuel with water or steam when the fuel is insufficient in the combustor 1. It is also possible to increase the generated energy by increasing the quantity of fluid supplied to the gas turbine 5. In addition, excessive heat produced by combustion in the combustor 1 can be removed to cool the combustor 1 by water or steam. Moreover, it is not required to provide any storage portions for storing water or steam therein, and it is possible to improve the efficiency of the power generation system by recycling water or steam.

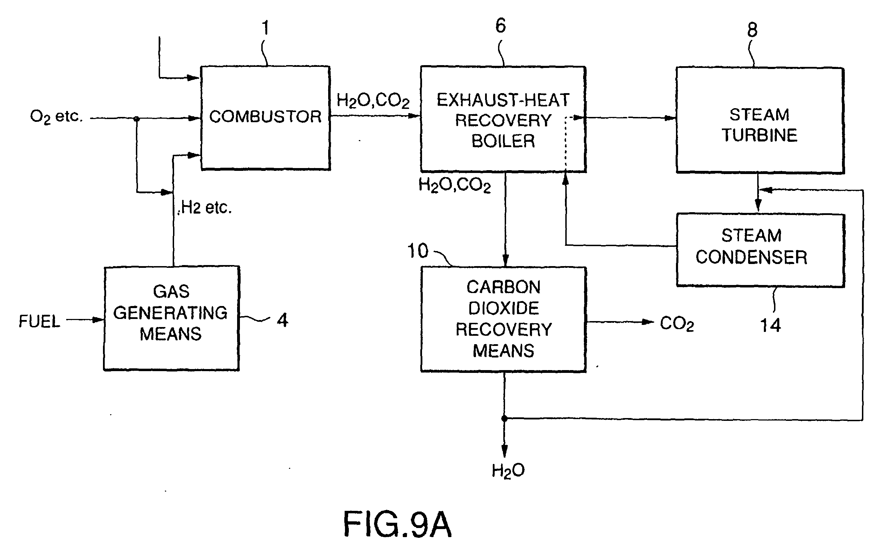

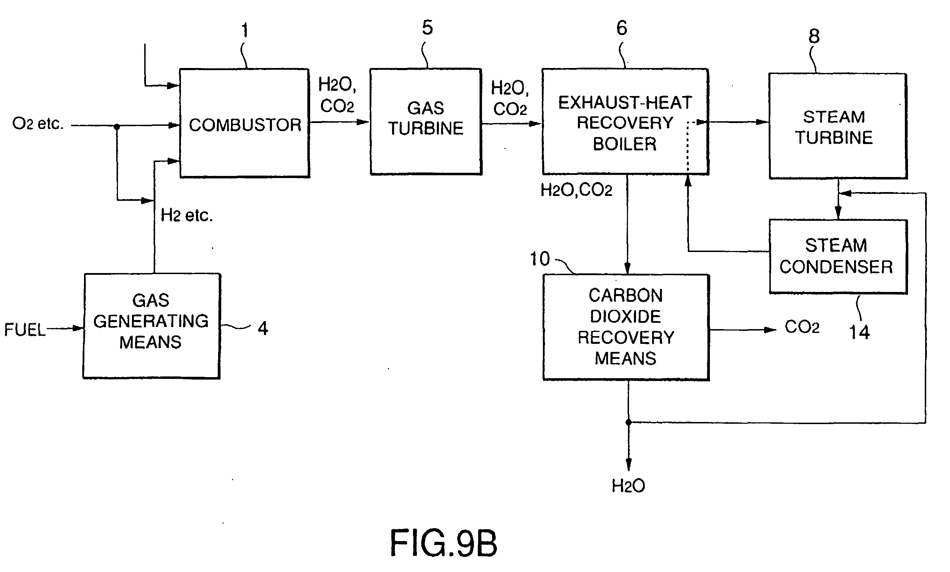

Referring to FIGS. 9A and 9B, the construction and operation of the eighth preferred embodiment of a power generation system, according to the present invention, will be described below.

FIGS. 9A and 9B are block diagrams, each of which illustrates a principal part of the eighth preferred embodiment of a power generation system according to the present invention. As shown in FIGS. 9A and 9B, at least a part of water or steam recovered by carbon dioxide recovery means 10 may be supplied as a working fluid for a steam turbine 8.

In the eighty preferred embodiment, when the flow rate of steam supplied to the steam turbine 8 is insufficient, it is possible to supply water or steam to the steam turbine 8 by supplying water or steam separated and recovered by carbon dioxide recovery means 10, without providing an additional water or steam supply source. Thus, the utilization factor of water or steam is improved.

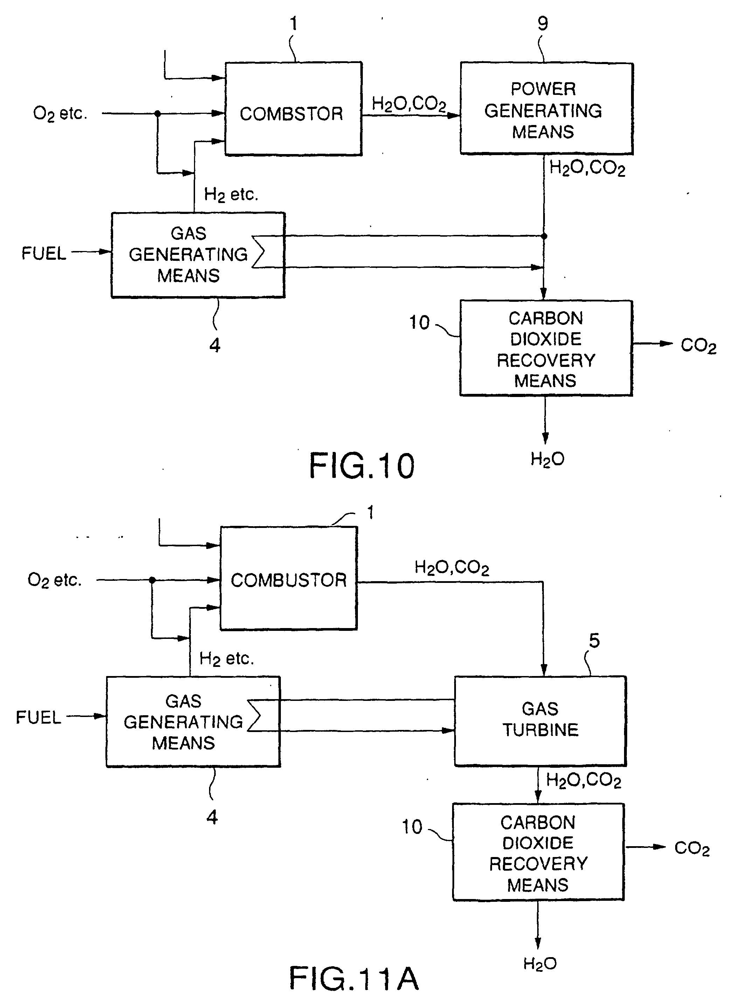

Referring to FIG. 10, the construction and operation of the ninth preferred embodiment of a power generation system, according to the present invention, will be described below.

FIG. 10 is a block diagram of the ninth preferred embodiment of a power generation system according to the present invention. As shown in FIG. 10, a fuel supplied to gas generating means 4 is reformed, decomposed or gasified by the heat of a fluid exhausted from a combustor 1. All or a part of the fluid exhausted from the combustor 1 may be supplied to the gas generating means 4 when the fuel is reformed, decomposed or gasified.

In the ninth preferred embodiment as described above, since the exhaust heat of the gas exhausted from the combustor 1 is used as a heat source for reforming, decomposing or gasifying the fuel, it is not required to provide an additional heat source, and it is possible to effectively utilize the exhaust heat.

Referring to FIGS. 11A through 11C, the construction and operation of the tenth preferred embodiment of a power generation system, according to the present invention, will be described below.

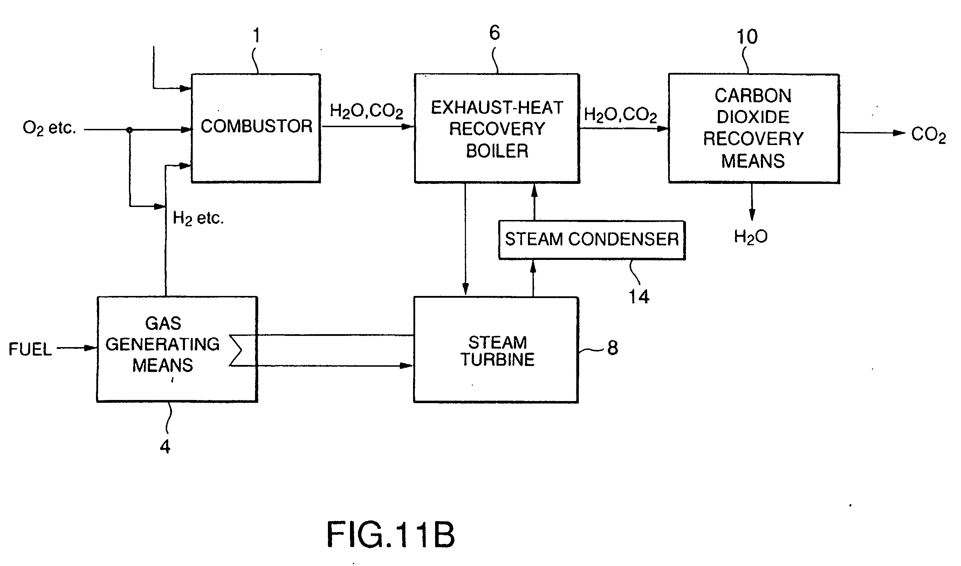

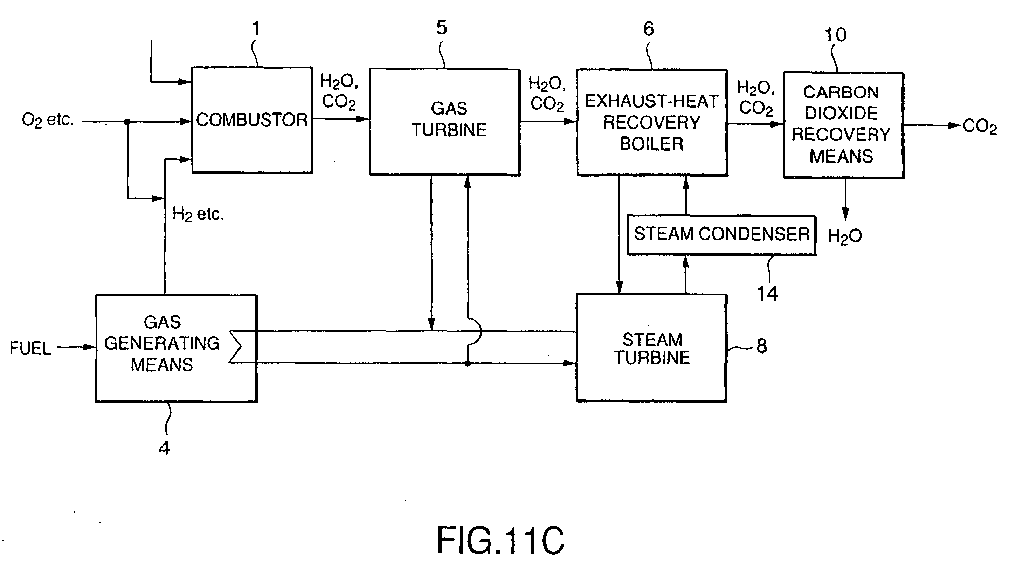

FIGS. 11A through 11C are block diagrams, each of which illustrates the tenth preferred embodiment of a power generation system according to the present invention. As shown in FIGS. 11A through 11C, a fuel supplied to gas generating means 4 is reformed, decomposed or gasified by the heat of a fluid extracted from a gas turbine 5 or a steam turbine 8. The fluid extracted from the gas turbine 5 (FIG. 11A), the fluid extracted from the steam turbine 8 (FIG. 11B), or the fluid extracted from the gas turbine 5 and the fluid extracted from the steam turbine 8 (FIG. 11C) may be all or a part of the fluid in the gas turbine 5 or the steam turbine 8 if the fuel supplied to the gas generating means 4 is reformed, decomposed or gasified.

In the tenth preferred embodiment as described above, since the exhaust heat of the fluid exhausted from the gas turbine 5 or the steam turbine 8 is used as a heat source for reforming, decomposing or gasifying a fuel, it is not required to provide an additional heat source, and it is possible to effectively utilize the exhaust source.

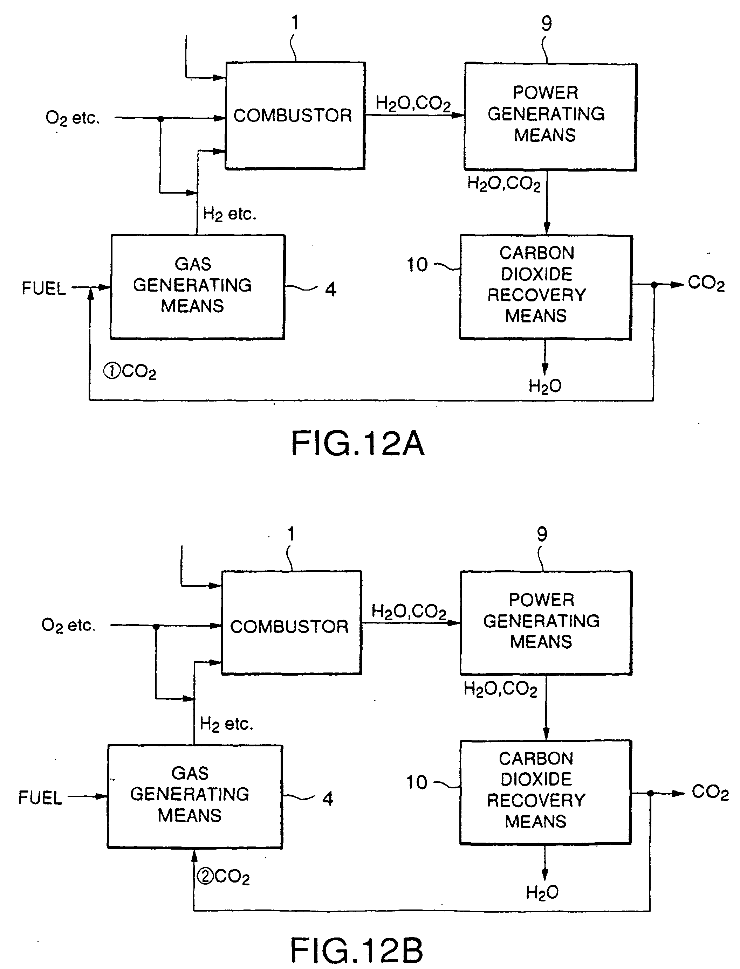

Referring to FIGS. 12A thorough 12D, the construction or operation of the eleventh preferred embodiment of a power generation system, according to the present invention, will be described below.

FIG. 12A through 12D are block diagrams, each of which illustrates the eleventh preferred embodiment of a power generation system, according to the present invention, will be described below. In this preferred embodiment, as shown in FIGS. 12A through 12D, at least a part of carbon dioxide separated and recovered by carbon dioxide recovery means 10 are supplied to gas generation means 4 or a combustor 1. Carbon dioxide may be supplied at any one or more the following four locations.

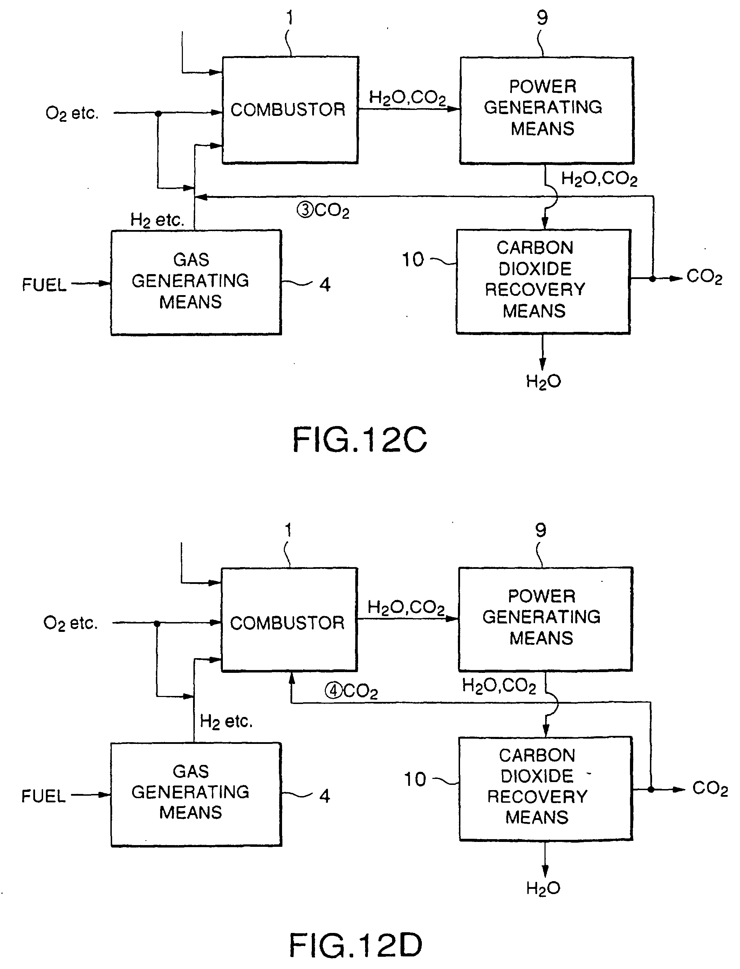

① Before a fuel is supplied to gas generating means 4, the fuel is mixed with carbon dioxide to be supplied to the gas generating means 4 (FIG. 12A).
② A fuel is supplied to gas generating means 4, and carbon dioxide is also supplied to the gas generating means 4 (FIG. 12B). In the gas generating means 4, the fuel is mixed with carbon dioxide.
③ Before a gas containing at least hydrogen supplied from gas generating means 4 is supplied to a combustor 1, it is mixed with carbon dioxide (FIG. 12C). The mixed fluid contains the gas supplied from the gas generating means 4.
④ A gas containing at least hydrogen is supplied to a combustor 1, and carbon dioxide is also supplied to the combustor 1 (FIG. 12D). In the combustor 1, the fuel is mixed with carbon dioxide.

A fuel or a gas containing at least hydrogen may be mixed with carbon dioxide at any one or more of the aforementioned locations ① - ④ .

As mentioned above, in the eleventh preferred embodiment, it is possible to supply carbon dioxide required for combustion in the combustor 1, by mixing a fuel with carbon dioxide. It is also possible to increase the quantity of the fluid, which is supplied to the gas turbine 5, to increase the generated energy. Moreover, excessive heat produced by combustion in the combustor 1 can be removed to cool the combustor 1 by supplying carbon dioxide to the gas containing at least hydrogen.

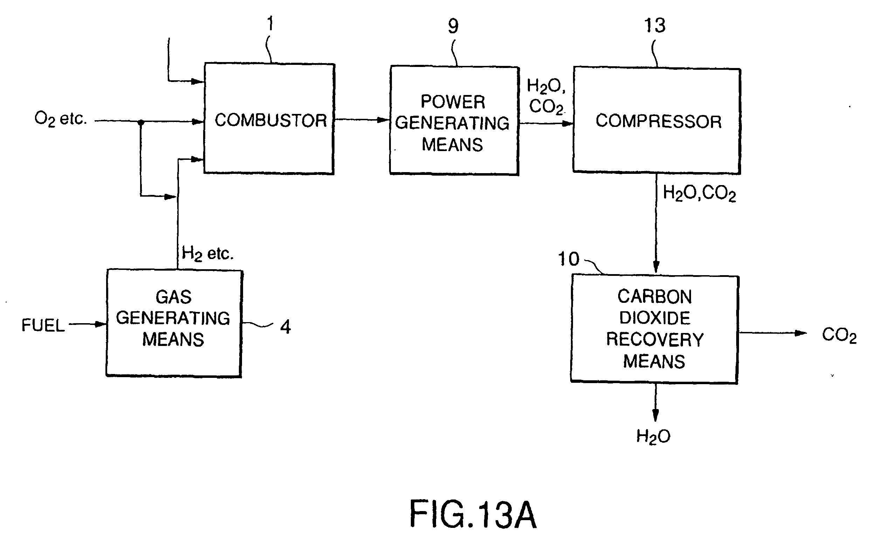

Referring to FIGS. 13A through 13D, the construction and operation of the twelfth preferred embodiment of a power generation system, according to the present invention, will be described below.

FIGS. 13A through 13D are block diagrams, each of which illustrates a principal part of the twelfth preferred embodiment of a power generation system according to the present invention. As shown in FIG. 13A, a compressor 13 (or pump) may be provided between power generating means 9 and carbon dioxide recovery means 10. The compressor 13 compresses a fluid supplied from the power generating means 9 to supply a compressed fluid to the carbon dioxide recovery means 10. By compressing the fluid supplied from the power generating means 9 before the fluid is supplied to the carbon dioxide recovery means 10, a great amount of carbon dioxide can be recovered by the carbon dioxide recovery means 10.

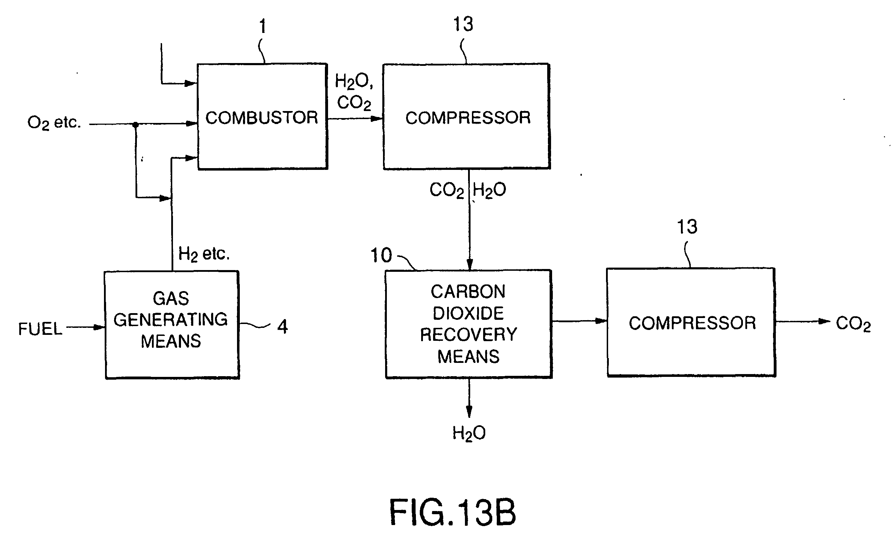

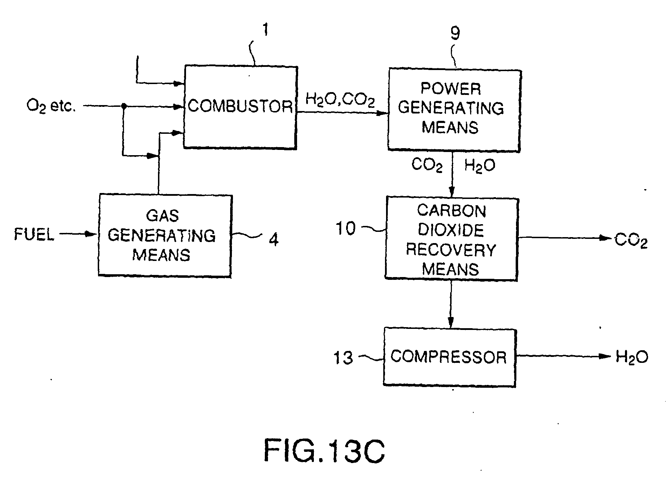

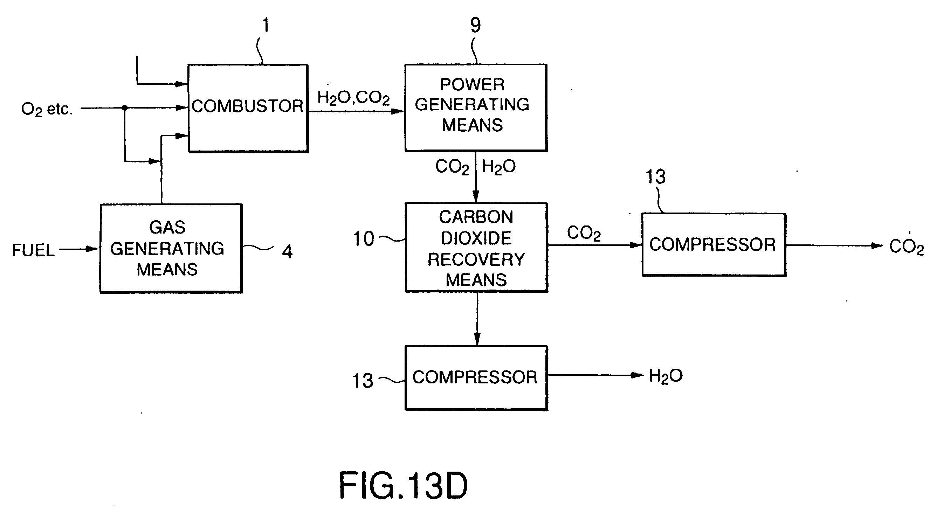

Alternatively, as shown in FIGS. 13A through 13D, a compressor 13 may be provided downstream of carbon dioxide recovery means 10. In FIG. 13B, carbon dioxide is compressed, and in FIG. 13C, water is compressed. In FIG. 13D, both of carbon dioxide and steam are compressed. The carbon dioxide or water recovered by carbon dioxide recovery means 10 is compressed by the compressor 13, so that the recovery of carbon dioxide or steam can be improved.

In this case, the compressor 13 may compress a fluid containing at least carbon dioxide, which is produced in the power generation system, to a desired pressure, and a plurality of compressors 13 may be provided in the power generation system if necessary.

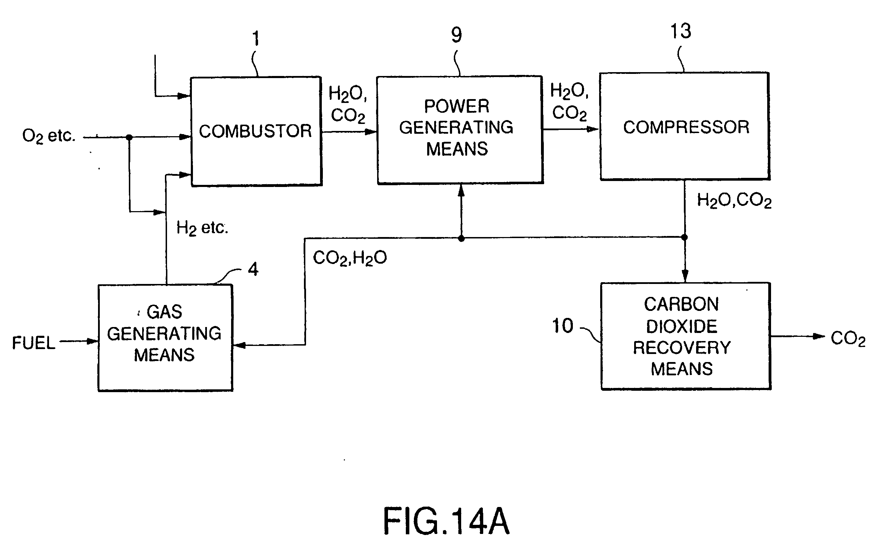

Referring to FIGS. 14A through 14D, the construction and operation of the thirteenth preferred embodiment of a power generation system, according to the present invention, will be described below.

FIGS. 14A through 14D are block diagrams, each of which illustrates a principal part of the thirteenth preferred embodiment of a power generation system according to the present invention. In the thirteenth preferred embodiment, as shown in FIG. 14A, a compressed fluid (carbon dioxide, steam) supplied from a compressor 13 provided between power generating means 9 and carbon dioxide recovery means 10 may be supplied to gas generating means 4 or a combustor 1, so that the amount of a fluid in the combustor 1 can be increased. By increasing the amount of the fluid supplied from the combustor 1, the generated energy of the power generating means 9 can be increased. The compressed fluid can be supplied to the combustor 1 as a coolant, so that it is possible to prevent the temperature in the combustor 1 from rising to a temperature higher than a required temperature.

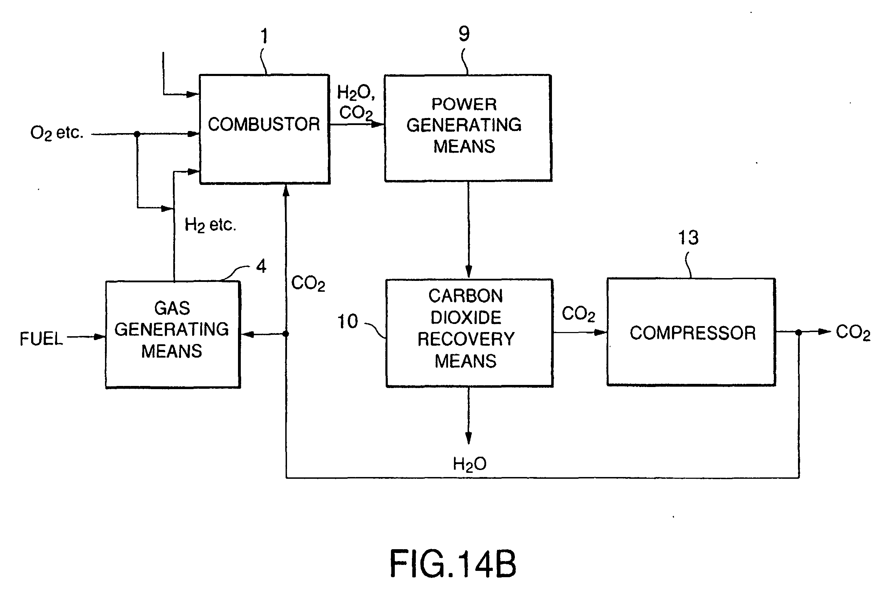

Alternatively, as shown in FIG. 14B, a compressed fluid (carbon dioxide) supplied from a compressor 13 provided downstream of carbon dioxide recovery means 10 may be supplied to gas generating means 4 or a combustor 1, so that the amount of a fluid in the combustor 1 can be increased. By increasing the amount of the fluid exhausted from the combustor 1, the generated energy of power generating means 9 can be increased. The compressed fluid can be supplied to the combustor 1 as a coolant, so that it is possible to prevent the temperature in the combustor 1 from rising to a temperature higher than a required temperature.

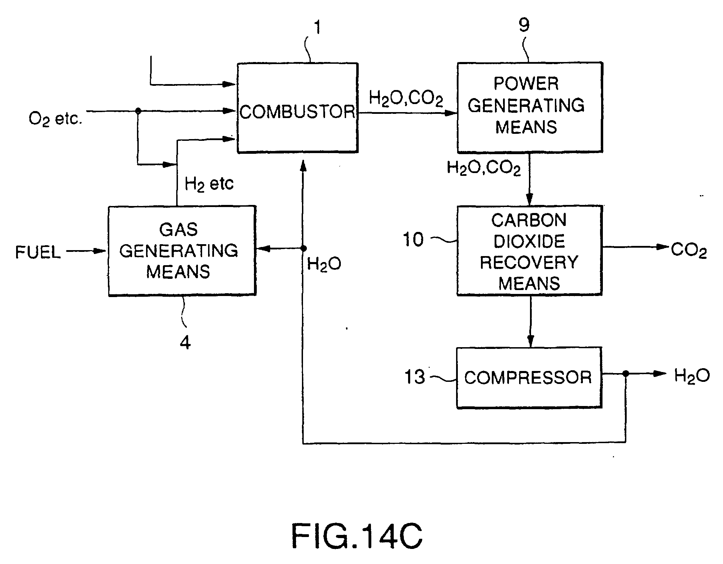

As shown in FIG. 14C, a compressed fluid (steam) supplied from a compressor 13 provided downstream of carbon dioxide recovery means 10 may be supplied to gas generating means 4 or a combustor 1, so that the amount of a fluid in the combustor 1 can be increased. By increasing the amount of the fluid supplied from the combustor 1, the generated energy of power generating means 9 can be increased. The compressed fluid can be supplied to the combustor 1 as a coolant, so that it is possible to prevent the temperature in the combustor 1 from rising to a temperature higher than a required temperature.

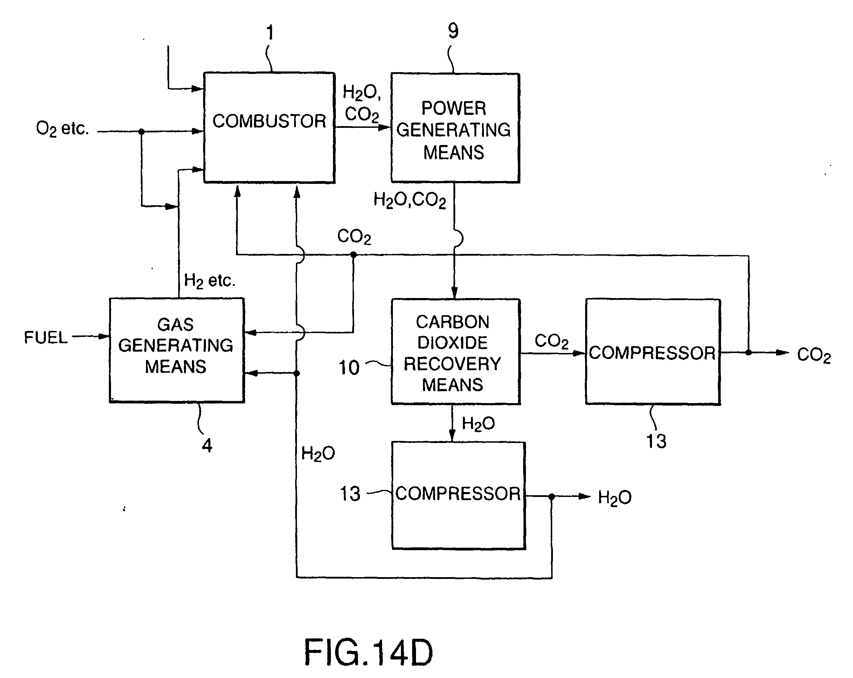

As shown in FIG. 14D, a compressed fluid (carbon dioxide, steam) supplied from a compressor 13 provided downstream of carbon dioxide recovery means 10 may be supplied to gas generating means 4 or a combustor 1, so that the amount of a fluid in the combustor 1 can be increased. By increasing the amount of the fluid exhausted from the combustor 1, the generated energy of power generating means 9 can be increased. The compressed fluid can be supplied to the combustor 1 as a coolant, so that it is possible to prevent the temperature in the combustor 1 from rising to a temperature higher than a required temperature. Furthermore, the fluid (carbon dioxide, steam) supplied from the compressor 13 may be directly mixed with a fuel supplied to the gas generating means 4, or with a gas containing hydrogen supplied to the combustor 1. In a case where the compressed fluid is supplied to the gas generating means 4, it serves as a heat source required to reform, decompose or gasify the fuel.

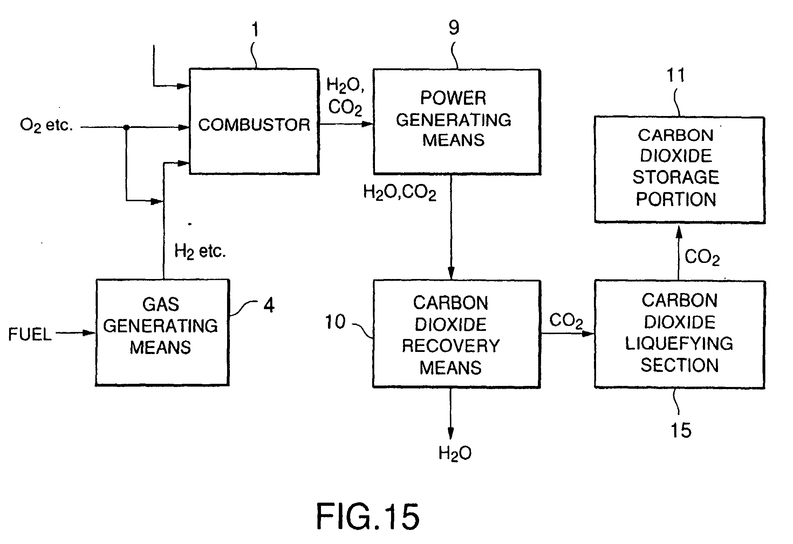

Referring to FIG. 15, the construction and operation of the fourteenth preferred embodiment of a power generation system, according to the present invention, will be described below.

FIG. 15 is a block diagrams of a principal part of the fourteenth preferred embodiment of a power generation system according to the present invention. As shown in FIG. 15, a carbon dioxide liquefying section 15 for liquefying carbon dioxide exhausted from carbon dioxide recovery means 10 is provided. Carbon dioxide can be easily liquefied, and the liquefied carbon dioxide can be easily treated. The carbon dioxide liquefying section 15 is provided with a carbon dioxide storage portion 11 for storing the liquefied carbon dioxide. If the carbon dioxide storage portion 11 is provided, the liquefied carbon dioxide may be stored if necessary.

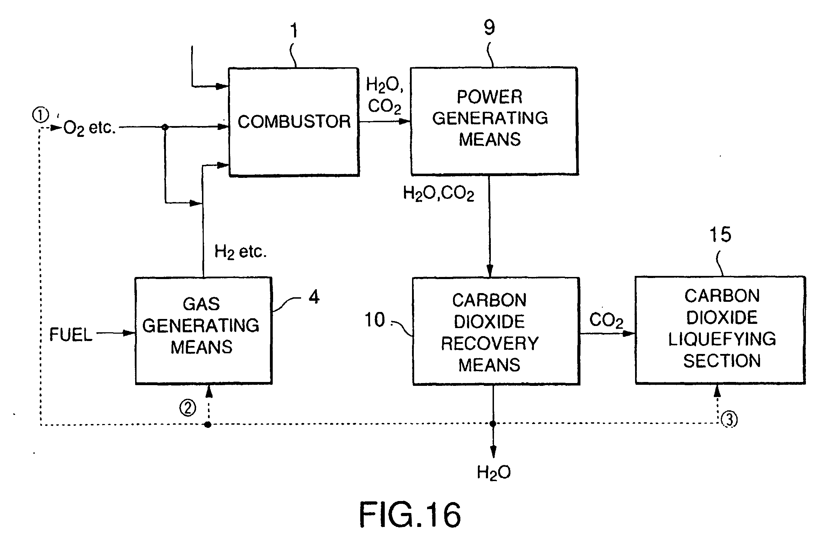

Referring to FIG. 16, the construction and operation of the fifteenth preferred embodiment of a power generation system, according to the present invention, will be described below.

FIG. 16 is a block diagrams of a principal part of the fifteenth preferred embodiment of a power generation system according to the present invention. As shown in FIG. 16, the cold of a liquid oxygen liquefied and supplied to a combustor 1, the heat of vaporization of a fuel or the heat of vaporization of water is used as a heat sink for a carbon dioxide liquefying section 15. It is not required to provide an additional heat sink for liquefying carbon dioxide, so that it is possible to improve the thermal efficiency of the power generation system, and it is also possible to decrease the costs and size of the power generation system. If water (containing steam) generated in the power generation system is used for a heat sink, the power efficiency can be improved.

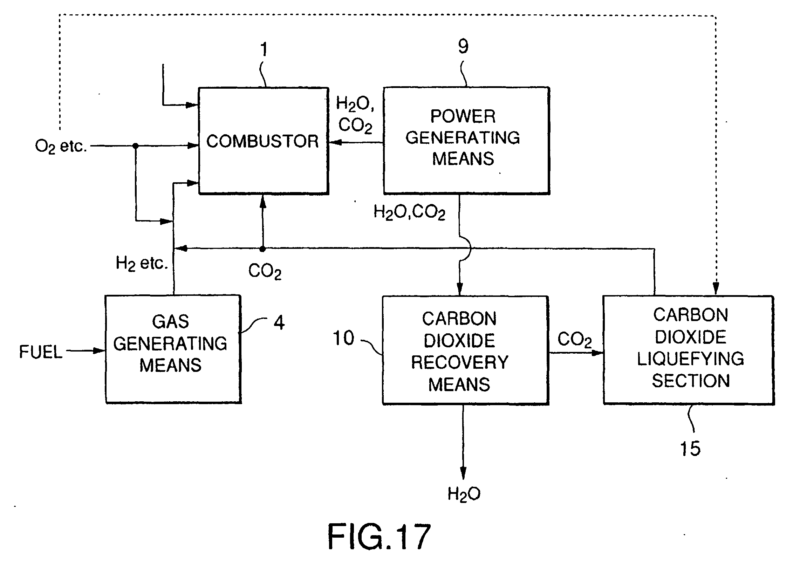

Referring to FIG. 17, the construction and operation of the sixteenth preferred embodiment of a power generation system, according to the present invention, will be described below.

FIG. 17 is a block diagrams of a principal part of the sixteenth preferred embodiment of a power generation system according to the present invention. As shown in FIG. 17, at least a part of carbon dioxide liquefied by a carbon dioxide liquefying section 15 is supplied to a combustor 1. The liquefied carbon dioxide supplied to the combustor 1 is heated in the combustor 1 to be vaporized, so that the amount of a fluid in the combustor 1 can be increased. By increasing the amount of the fluid supplied from the combustor 1, the generated energy of power generating means 9 can be increased. The liquefied carbon dioxide can be supplied to the combustor 1 as a coolant, and it is possible to prevent the temperature in the combustor 1 from increasing to a temperature higher than a required temperature.

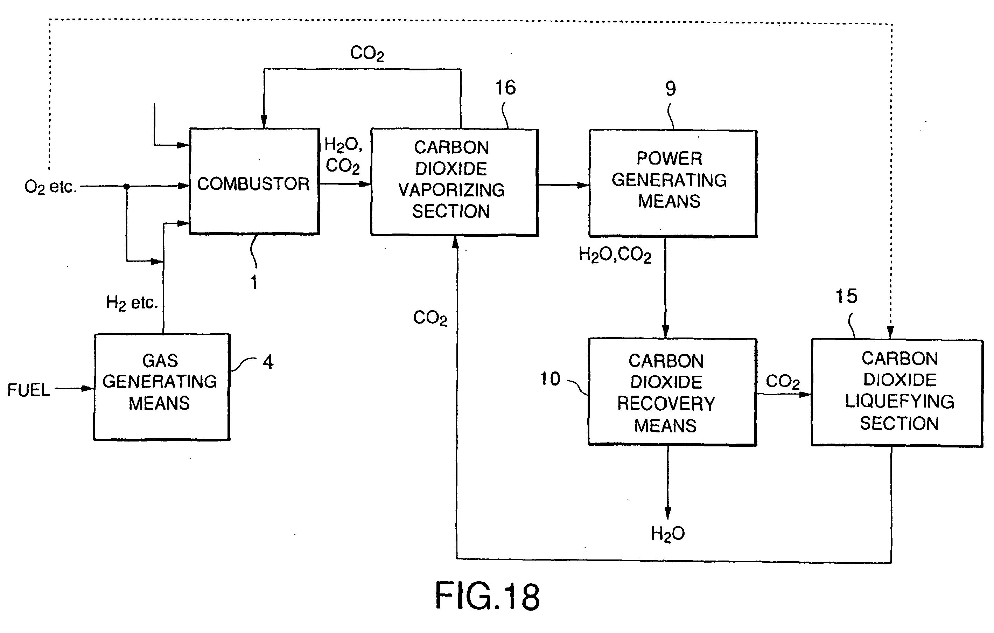

Referring to FIG. 18, the construction and operation of the seventeenth preferred embodiment of a power generation system, according to the present invention, will be described below.

FIG. 18 is a block diagrams of a principal part of the seventeenth preferred embodiment of a power generation system according to the present invention. As shown in FIG. 18, a carbon dioxide vaporizing section 16 is provided between a combustor 1 and power generating means 9. At least a part of liquefied carbon dioxide is supplied from a carbon dioxide liquefying section 15 to the carbon dioxide vaporizing section 16. The liquefied carbon dioxide is heated by the heat of a fluid supplied from the combustor 1, so that the liquefied carbon dioxide is vaporized and expanded to be supplied to the combustor 1. The amount of a fluid supplied to the power generating means 9 can be increased by the vaporized carbon dioxide supplied to the combustor 1. The energy generated by the power generating means 9 can be increased by increasing the amount of the fluid supplied to the power generating means 9. The carbon dioxide can be supplied to the combustor 1 as a coolant, so that it is possible to prevent the temperature in the combustor 1 from rising to a temperature higher than a required temperature.

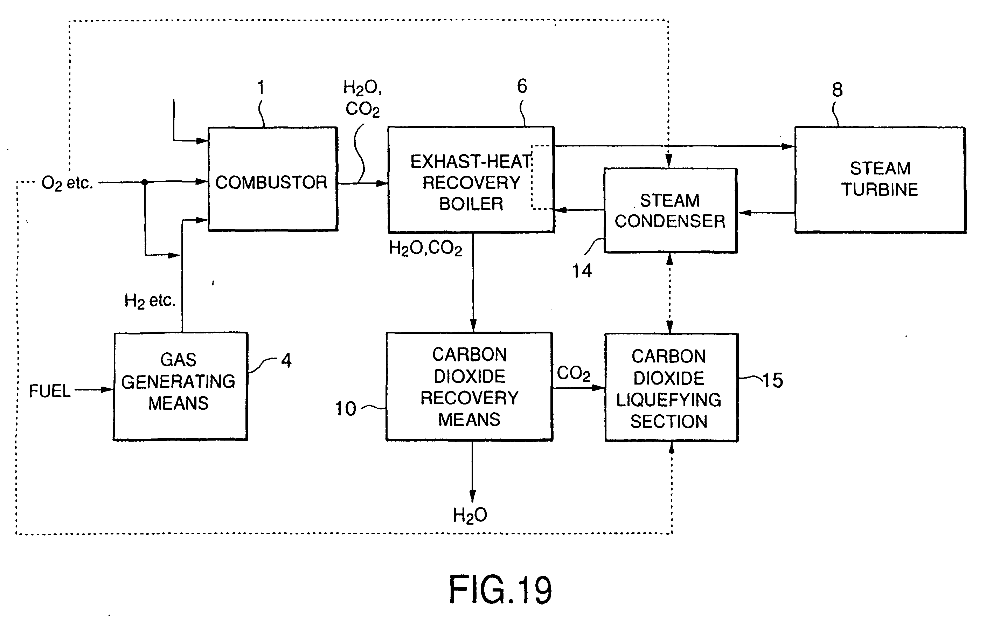

Referring to FIG. 19, the construction and operation of the eighteenth preferred embodiment of a power generation system, according to the present invention, will be described below.

FIG. 19 is a block diagrams of a principal part of the eighteenth preferred embodiment of a power generation system according to the present invention. As shown in FIG. 19, the cold of liquid oxygen supplied to a combustor 1 or carbon dioxide liquefied by a carbon dioxide liquefying section 15 is used for cooling a steam condenser 14 provided in a steam turbine 8. If the cold of liquid oxygen or liquid carbon dioxide is used for cooling steam in the condenser 14, the cooling (condensation) can be effectively carried out without the need of an additional cooling unit.

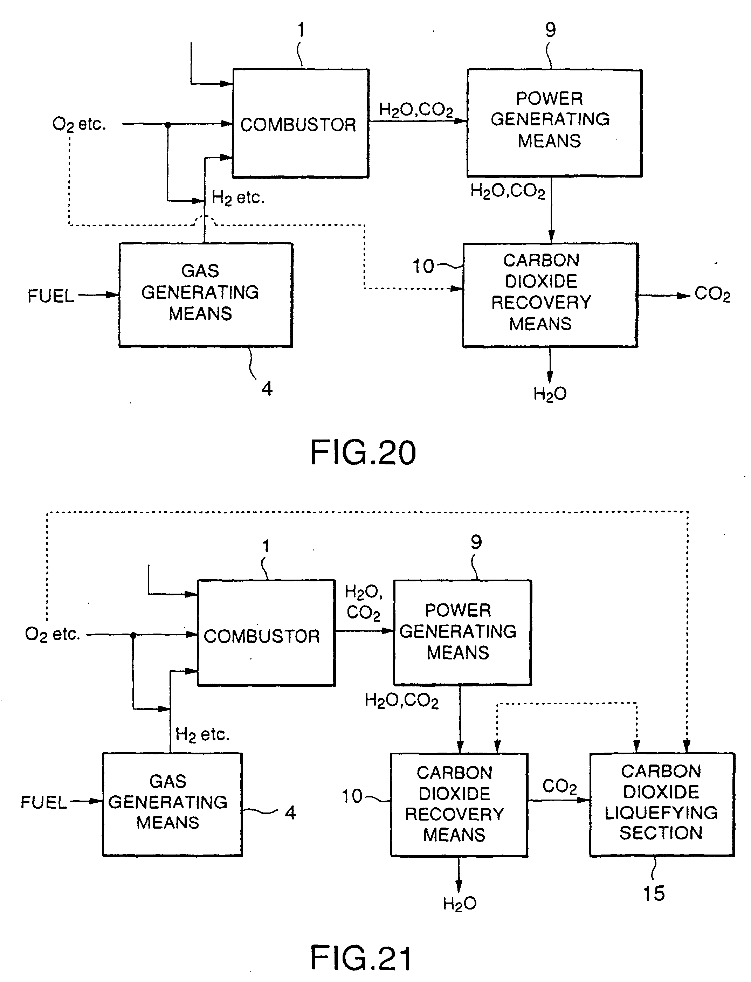

Referring to FIG. 20, the construction and operation of the nineteenth preferred embodiment of a power generation system, according to the present invention, will be described below.

FIG. 20 is a block diagrams of a principal part of the nineteenth preferred embodiment of a power generation system according to the present invention. As shown in FIG. 20, a fluid supplied from a combustor 1 to carbon dioxide recovery means 10 can be cooled (i. e., steam can be condensed) using the cold of liquefied oxygen supplied to the combustor 1. If the cold of liquefied oxygen is used, it is possible to effectively utilize the heat in the power generation system without the need of an additional heat sink unit.

Referring to FIG. 21, the construction and operation of the twentieth preferred embodiment of a power generation system, according to the present invention, will be described below.

FIG. 21 is a block diagrams of a principal part of the twentieth preferred embodiment of a power generation system according to the present invention. As shown in FIG. 21, a fluid supplied from a combustor 1 to carbon dioxide recovery means 10 can be cooled (i. e., steam can be condensed) using the cold of carbon dioxide liquefied by a carbon dioxide liquefying section 15. If the cold of liquefied carbon dioxide is used, it is possible to effectively utilize the heat in the power generation system without the need of an additional heat sink unit.

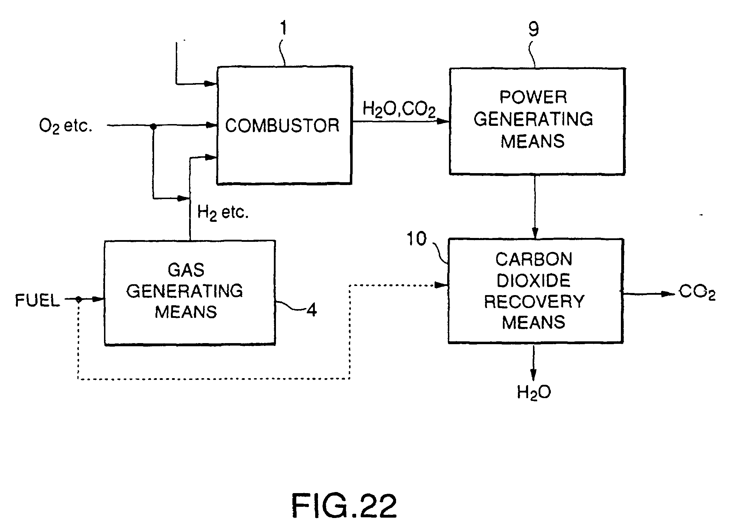

Referring to FIG. 22, the construction and operation of the twenty-first preferred embodiment of a power generation system, according to the present invention, will be described below.

FIG. 22 is a block diagrams of a principal part of the twenty-first preferred embodiment of a power generation system according to the present invention. As shown in FIG. 22, a fluid supplied from a combustor 1 to carbon dioxide recovery means 10 can be cooled (i. e., steam can be condensed) using the heat of vaporization of a fuel (e.g., methanol). If the heat of vaporization of the fuel is used, it is possible to effectively utilize the heat in the power generation system without the need of an additional heat sink unit.

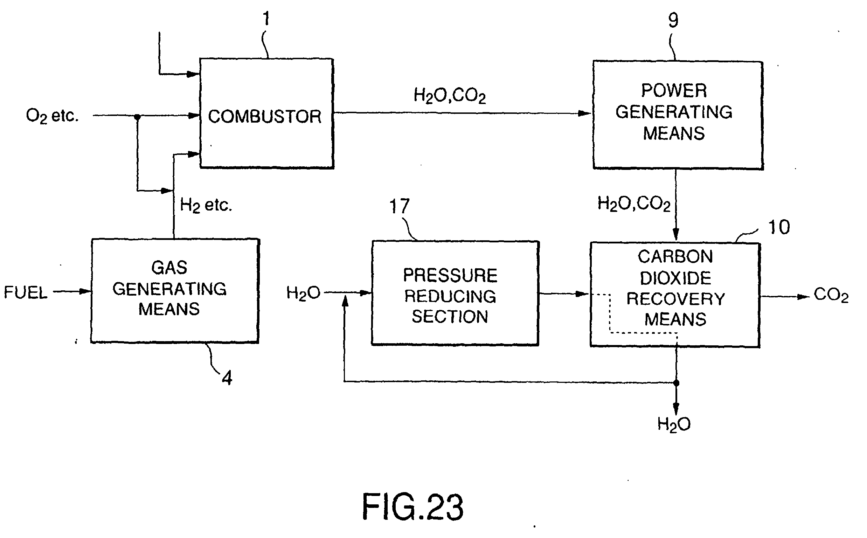

Referring to FIG. 23, the construction and operation of the twenty-second preferred embodiment of a power generation system, according to the present invention, will be described below.

FIG. 23 is a block diagrams of a principal part of the twenty-second preferred embodiment of a power generation system according to the present invention. As shown in FIG. 23, a fluid supplied from a combustor 1 to carbon dioxide recovery means 10 can be cooled (i.e., steam can be condensed) using the heat of vaporization produced when the pressure of water supplied to a pressure reducing section 17 is reduced. Since water is used as a cold source, the costs can be reduced and the handling can be easy.

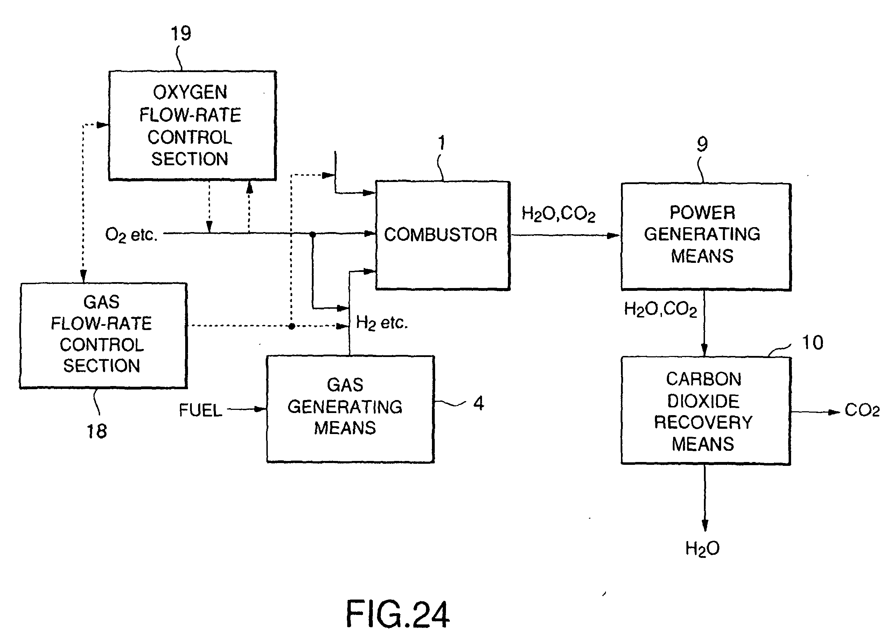

Referring to FIG. 24, the construction and operation of the twenty-third preferred embodiment of a power generation system, according to the present invention, will be described below.

FIG. 24 is a block diagrams of a principal part of the twenty-third preferred embodiment of a power generation system according to the present invention. As shown in FIG. 24, there is provided a gas flow-rate control section 18 for measuring and controlling the flow rate of a fluid containing a gas supplied from gas generating means 4. There is also provided an oxygen flow-rate control section 19 for measuring and controlling the flow rate of oxygen contained in a fluid, which contains, as a main component, oxygen or a compound consisting of carbon atom(s), hydrogen atom(s) or oxygen atom(s).

The flow rate of the fluid containing a gas is measured by the gas flow-rate control section 18, and the flow rate of oxygen to be supplied to a combustor 1 may be controlled by the oxygen flow-rate control section 19 so as to correspond to the measured flow-rate value of the fluid. Alternatively, the flow rate of oxygen may be measured by the oxygen flow-rate control section 19, and the flow rate of the fluid containing a gas to be supplied to the combustor 1 may be controlled by the gas flow-rate control section 18 so as to correspond to the measured flow-rate value of oxygen.

Assuming that the fuel supplied to the gas generating means 4 is $CxHyOz$, the flow rate of oxygen contained in a fluid containing, as a main component, oxygen or a compound consisting of carbon atom(s) and/or hydrogen atom(s) and/or oxygen atom(s) is controlled on the basis of a stoichiometric mixture ratio as expressed by the following formula (4).

$$(4_x + 1_y - 2_x)/4 \qquad (4)$$

As described above, in the twenty-third preferred embodiment, the flow rate of a fluid containing a gas and the flow rate of oxygen contained in a fluid, which contains, as a main component, oxygen or a component consisting of carbon atom(s) and/or hydrogen atom(s) and/or oxygen atom(s), are controlled by the gas flow-rate control section 18 and the oxygen flow-rate control section 19 on the basis of the formula (4), so that the power generating efficiency can be optimized and incomplete combustion can be inhibited. If the incomplete combustion is inhibited, it is possible to by-products from being deposited, so that it is possible to provide a safe power generation system which does not have a bad influence on the global atmosphere.

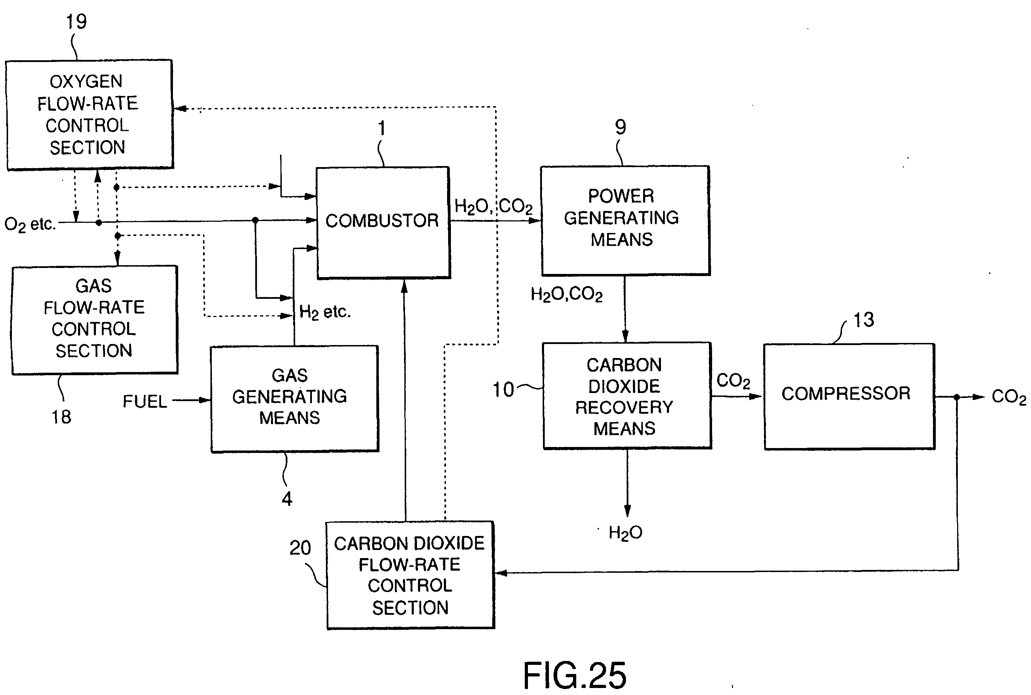

Referring to FIG. 25, the construction and operation of the twenty-fourth preferred embodiment of a power generation system, according to the present invention, will be described below.

FIG. 25 is a block diagrams of a principal part of the twenty-fourth preferred embodiment of a power generation system according to the present invention. As shown in FIG. 25, a carbon dioxide flow-rate measuring section 20 is provided between a combustor 1 and a compressor 13. The flow rate of carbon dioxide of a fluid supplied from the compressor 13 is measured by the carbon dioxide flow-rate measuring section 20. The measured value is fed to an oxygen flow-rate controlling section 19. On the basis of the measured values of a fuel flow-rate controlling section 18 and the carbon dioxide flow-rate measuring section 20, the oxygen flow-rate measuring section 19 controls the flow rate of oxygen contained in a fluid, which is supplied to the combustor 1 and which contains, as a main component, oxygen or a component consisting of carbon atom(s) and/or hydrogen atom(s) and/or oxygen atom(s).

As described above, in the twenty-fourth preferred embodiment, the flow rate of a fluid containing a gas, the flow rate of oxygen contained in a fluid, which contains, as a main component, oxygen or a component consisting of carbon atom(s) and/or hydrogen atom(s) and/or oxygen atom(s), and the flow rate of carbon dioxide contained in a fluid supplied from the compressor 13 are controlled by the gas flow-rate control section 18, the oxygen flow-rate control section 19 and the carbon dioxide flow-rate control section 20 on the basis of the formula (4), so that the power generating efficiency can be optimized and incomplete combustion can be inhibited. If the incomplete combustion is thus inhibited, it is possible to inhibit by-products from being deposited by power generation, so that it is possible to provide a safe power generation system which does not have a bad influence on the global atmosphere.

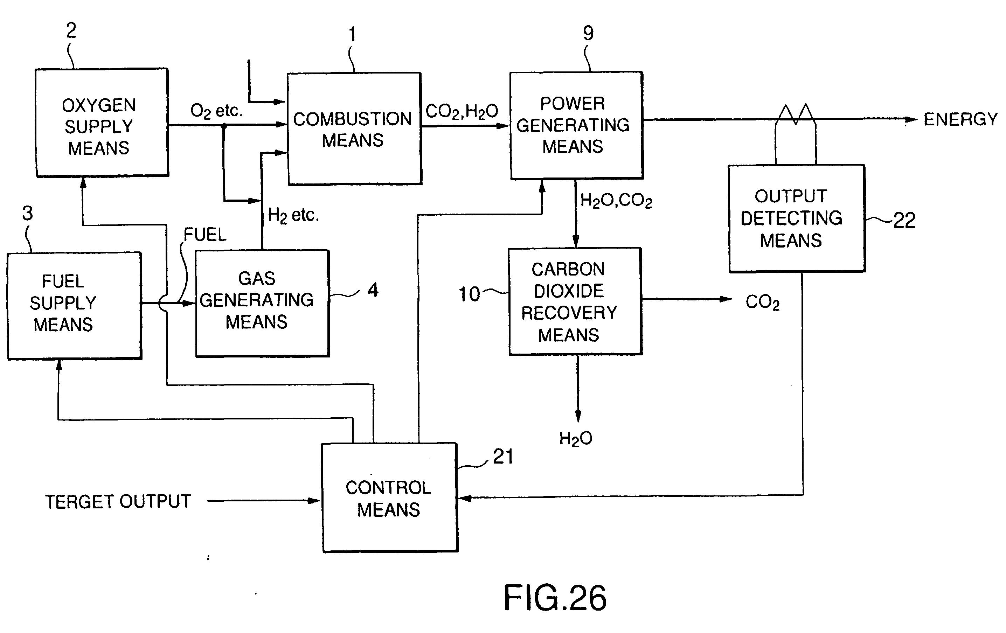

While the preferred embodiments of a power generation system according to the present invention have been described, the present invention should not be limited thereto, but the invention may be applied to a power generation control system. FIG. 26 is a block diagram of the twenty-fifth preferred embodiment of a power generation control system according to the present invention.

In FIG. 26, combustion means 1, gas generating means 4, power generating means 9, carbon dioxide recovery means 10 and so forth have the same constructions as those in the preceding preferred embodiments. The flows of oxygen, a fuel, hydrogen, carbon dioxide, water, energy and so forth are expressed by thick arrows in FIG. 26. In this preferred embodiment, a power generation control system includes: oxygen supply means 2 comprising, e.g., an oxygen tank, an oxygen supply valve and so forth; fuel supply means 3 comprising a fuel tank, a fuel supply valve and so forth; control means 21 for controlling the operations of the combustion means 1, the power generating means 9, the carbon dioxide recovery means 10 and so forth; and output detecting means 22 for detecting the output of electric energy generated by the power generating means 9.

A target output is inputted to the control means 21, and actual energy generated by the power generating means 9 is detected by the output detecting means 22. On the basis of the target output and the actually detected output, the control means 21 determines the feed rates of the fuel, oxygen and so forth and controls combustion in the combustion means 1. Thus, the energy generated by the power generating means 9 can be controlled, and the amount of the recovered carbon dioxide, which is most important in the present invention, can be detected and controlled. The most effective amount of the recovery carbon dioxide is calculated at the input target output, and the amount of the recovery carbon dioxide is controlled so that the amount of carbon dioxide emitted to atmosphere is minimum.

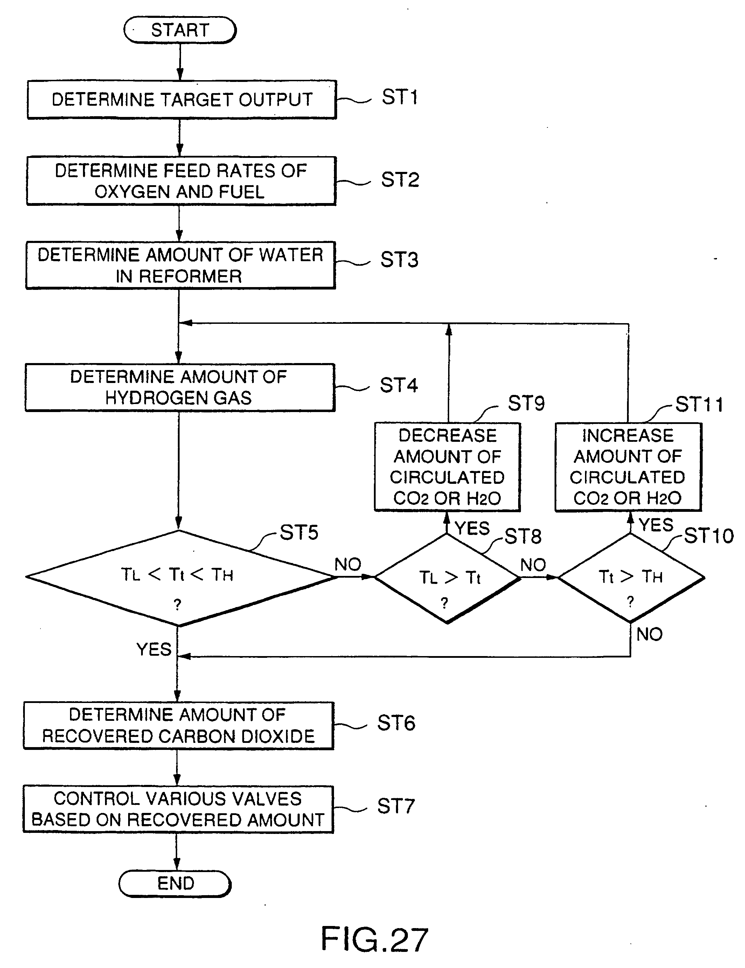

Finally, referring to FIG. 27, a process for controlling the twenty-sixth preferred embodiment of a power generation system, according to the present invention, will be described below. Furthermore, the control process shown in FIG. 27 may be applied to the power generation control system shown in FIG. 26.

In FIG. 27, first, a target output is determined at step ST1. On the basis of the determined target output, the feed rates of oxygen and a fuel are determined (step ST2). Then, the amount of water in a reformer serving as gas generating means is determined (step ST3), and the amount of hydrogen gas supplied from the reformer is determined (step ST4). Subsequently, it is determined at step ST5 whether a target combustion temperature $T_t$ in the combustion means 1 is higher than the allowable minimum temperature $T_L$ and lower than the allowable maximum temperature $T_H$. When the target temperature $T_t$ is within the allowable scope, the amount of recovered carbon dioxide is determined at step ST6. On the basis of the determined amount of the recovered carbon dioxide, various valves are controlled (step ST7), so that carbon dioxide is recovered in a usual power generating state to inhibit carbon dioxide from being emitted.

When it is determined at step ST5 that the target temperature is beyond the desired scope, it is determined whether the target temperature is lower than the minimum temperature (step ST8). When it is determined the target temperature is lower than the minimum temperature, the amounts of the circulated carbon dioxide and oxygen are decreased, and the routine is repeated from the step ST3. When it is determined at step ST8 that the target temperature exceeds the minimum temperature, it is determined again whether the target temperature exceeds the maximum temperature (step ST10). When it is determined that the target temperature does not exceed the maximum temperature, the routine goes to step ST6. When it is determined at step ST10 that the target temperature exceeds the maximum temperature, it is reset so that the amounts of the circulated carbon dioxide and water are decreased (step ST11). Then, the routine goes from step ST11 to step ST3, and the processes of steps ST4 through ST7 are repeated.

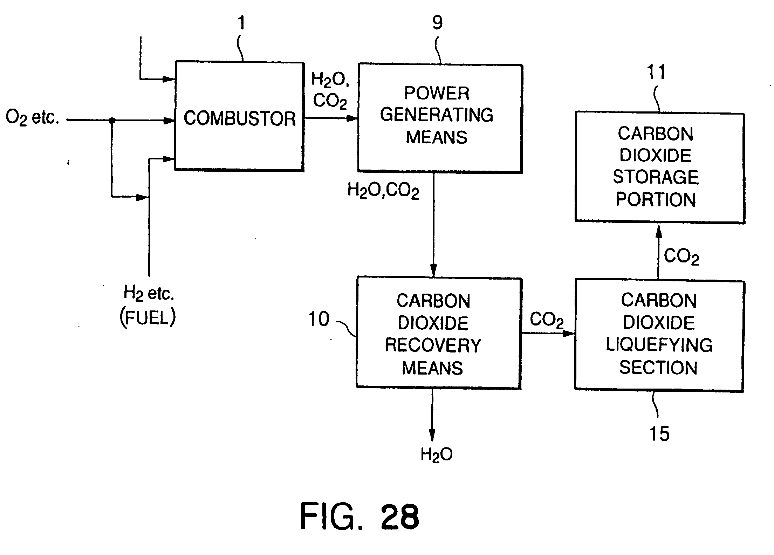

In the former embodiments described above, even though all of the power generation systems have the gas generating means 4 for supplying a gas containing at least hydrogen to the combustion means 1, the present invention is not limited in the constitution and may comprise a component without the gas generating means such as a power generation system according to the twenty-seventh embodiment shown in FIG. 28.

In FIG. 28, the power generation system according to twenty-seventh embodiment comprises a combustor 1 for receiving and burning a fluid containing at least hydrogen and a fluid containing, as a main component, oxygen or a compound containing atoms selected from the group consisting of carbon, hydrogen or oxygen, power generating means 9 for generating electricity using a fluid supplied from the combustor 1, and carbon dioxide recovery means 10 for recovering at least a part of carbon dioxide from a fluid supplied from the power generating means 9.

The carbon dioxide recovery means 10 liquefies steam to separate the steam into a gas and liquid. The carbon dioxide recovery means 10 is connected to a carbon dioxide liquefying section 15 for requefying a fluid containing carbon dioxide exhausted from the carbon dioxide recovery means 10. The power generation system according to twenty-seventh embodiment further comprises carbon dioxide storage means 11 for storing carbon dioxide liquefied by the carbon dioxide liquefying section 15.

Moreover, carbon dioxide liquefied and stored in the storage means 11 is composed with hydrogen supplied from another section to reform a fuel such as a methanol when the occasion demands. The reformed methanol and the like is used as a fuel for the power generating means.

Thus, it is possible to suitably generate electricity at a desired output without emitting carbon dioxide to atmosphere. Thus, it is possible to inhibit the earth anathermal phenomenon, and it is possible to inhibit acid rain which may destroy the plant system containing tropical rain forest.

**Claims**

1. A power generation system comprising:

   gas generating means (4) for reforming, decomposing or gasifying a fuel to generate a gas containing at least hydrogen;
   combustion means (1) for receiving and burning a fluid containing the gas supplied from the gas generating means and fluid containing as a main component oxygen or a compound containing atoms selected from the group consisting of carbon, hydrogen or oxygen atoms and combinations thereof;
   power generating means (9) for generating electricity using a fluid supplied from the combustion means (1); and
   carbon dioxide recovery means (10) for recovering at least a part of carbon dioxide from a fluid exhausted from the power generating means (9),

   wherein said fuel is a compound containing carbon or hydrogen, said fuel being selected from the group consisting of methanol, ethanol, methane, ethane, propane, butane, dimethylether, diethylether, coal, carbon monoxide, formic acid and the mixture thereof,
   **characterized in that** at least a part of water or steam recovered by said carbon dioxide recovery means (10) is supplied to a steam turbine (8) serving as said power generating means (9).

2. A power generation system according to claim 1, wherein said oxygen contains at least oxygen obtained by decomposing water or separating air.

3. A power generation system according to claim 1, wherein said oxygen is liquid oxygen.

4. A power generation system according to claim 3, wherein a fluid supplied from said combustion means (1) and supplied to said carbon dioxide recovery means (10) is cooled by said liquid oxygen, liquefied carbon dioxide, or heat of vaporization of said fuel or water.

5. A power generation system according to claim 1, wherein said fluid containing the gas supplied from the gas generating means (4) is mixed with said fluid containing as a main component oxygen or a compound containing atoms selected from the group consisting of carbon, hydrogen and oxygen atoms and the combinations thereof, before said fluid are supplied to said combustion means (1).

6. A power generation system according to claim 1, wherein said carbon dioxide recovery means (10) liquefies steam to separate the steam into a gas and a liquid.

7. A power generation system according to claim 6, wherein a fluid supplied from said combustion means (1) and supplied to said carbon dioxide recovery means (10) is cooled by said liquid oxygen, liquefied carbon dioxide, or heat of vaporization of said fuel or water.

8. A power generation system according to claim 1, wherein said power generating means (9) contains at least one of a gas turbine (5) and a steam turbine (8).

9. A power generation system according to claim 8, wherein a working fluid supplied to said steam turbine (8) is heated by the heat of a fluid supplied from said combustion means (1).

10. A power generation system according to claim 1, wherein water or steam is supplied to any one of said combustion means (1) and said gas generating means (4).

11. A power generation system according to claim 1, wherein at least a part of water or steam recovered by said carbon dioxide recovery means (10) is supplied to at least one of said combustion means (1) and said gas generating means (4).

12. A power generation system according to claim 11, wherein said fuel supplied to said gas generating means (4) is reformed, decomposed or gasified by the heat of a fluid supplied from said combustion means (1).

13. A power generation system according to claim 11, wherein said fuel supplied to said gas generating means (4) is reformed, recomposed or gasified by the heat of a fluid extracted from said gas turbine (5) or said steam turbine (8).

14. A power generation system according to claim 1, wherein said carbon dioxide recovered by said carbon dioxide recovery means (10) is supplied to at least one of said gas generating means (4) and said combustion means (1).

15. A power generation system according to claim 1, further comprising a compressor (13) for compressing a fluid containing carbon dioxide.

16. A power generation system according to claim 15, wherein a fluid exhausted from said compressor (13) is supplied to at least one of said combustion means (1) and said gas generating means (4).

17. A power generation system according to claim 1, further comprising a carbon dioxide liquefying section (15) for liquefying a fluid containing carbon dioxide exhausted from said carbon dioxide recovery means (10).

18. A power generation system according to claim 17, further comprising carbon dioxide storage means for storing carbon dioxide liquefied by said carbon dioxide liquefying section (15).

19. A power generation system according to claim 18, wherein a fluid exhausted from said combustion means (1) and supplied to said carbon dioxide recovery means (10) is cooled by said liquid oxygen liquefied carbon dioxide, or heat of vaporization of said fuel or water.

20. A power generation system according to claim 1, further comprising:

a gas flow-rate control section (18) for controlling a flow rate of a fluid containing a gas supplied from said gas generating means (4) and supplied to said combustion means (1);
an oxygen flow-rate control section (19) for controlling a flow rate of oxygen contained in said fluid supplied to said combustion means (1), said fluid containing as a main component oxygen or a compound containing atoms selected from the group consisting of carbon, hydrogen and oxygen atoms and the combination thereof; and
control means (21) for controlling a flow rate of oxygen or a fuel so as to correspond to said flow rate of said fluid containing gas or said oxygen.

21. A power generation system according to claim 20, wherein said control means (21) controls said gas flow-rate control section (18) and said oxygen flow-rate control section (19) so that said flow rate of said oxygen is obtained on the basis of a stochiometric mixture ratio of $(4_X + 1_Y + 2_Z)/4$, where X, Y and Z are integers, assuming that said fluid containing a gas is CxHyOz.

### Patentansprüche

1. Energieerzeugungssystem mit:

Gaserzeugungsmitteln (4) zum Umformen, Zersetzen oder Gasifizieren eines Brennstoffs, um ein Gas zu erzeugen, das zumindest Wasserstoff beinhaltet;

Verbrennungsmitteln (1) zum Aufnehmen und Verbrennen eines Fluids, das das von den Gaserzeugungsmitteln her gelieferte Gas beinhaltet, und von Fluid, das als Hauptkomponente Sauerstoff oder eine Verbindung beinhaltet, die Atome von Kohlenstoff, Wasserstoff oder Sauerstoff oder Kombinationen daraus aufweist;

einem Energieerzeugungsmittel (9) zum Erzeugen von Elektrizität unter Verwendung eines von den Verbrennungsmitteln (1) her gelieferten Fluids; und

Kohlendioxid-Wiedergewinnungsmittel (10) zum Wiedergewinnen zumindest eines Teils des Kohlendioxids aus einem von dem Energieerzeugungsmittel (9) ausgestoßenen Fluid,

wobei der Brennstoff eine Verbindung ist, die Kohlenstoff oder Wasserstoff beinhaltet und aus Methanol, Ethanol, Methan, Ethan, Propan, Butan, Dimethylether, Diethylether, Kohle, Kohlenmonoxid, Ameisensäure und der Mischung daraus ausgewählt ist, **dadurch gekennzeichnet, dass** zumindest ein Teil des Wassers oder Dampfes, das bzw. der von den Kohlendioxid-Wiedergewinnungsmitteln (10) wiedergewonnen wird, einer Dampfturbine (8) zugeführt wird, die als das Energieerzeugungsmittel (9) dient.

2. Energieerzeugungssystem nach Anspruch 1, wobei der Sauerstoff zumindest den Sauerstoff beinhaltet, der durch Zersetzen von Wasser oder Separieren von Luft erhalten wird.

3. Energieerzeugungssystem nach Anspruch 1, wobei der Sauerstoff flüssiger Sauerstoff ist.

4. Energieerzeugungssystem nach Anspruch 3, wobei ein Fluid, das von den Verbrennungsmitteln (1) zu den Kohlendioxid-Wiedergewinnungsmitteln (10) geliefert wird, mittels des flüssigen Sauerstoffs, verflüssigten Kohlendioxids oder Wärme aus der Verdampfung des Brennstoffs oder Wassers gekühlt wird.

5. Energieerzeugungssystem nach Anspruch 1, wobei das Fluid, das das von den Gaserzeugungsmitteln (4) gelieferte Gas beinhaltet, mit dem Fluid gemischt wird, das als Hauptkomponente Sauerstoff oder eine Verbindung beinhaltet, die Atome von aus Kohlenstoff, Wasserstoff oder Sauerstoff oder Kombinationen daraus aufweist, bevor das Fluid zu den Verbrennungsmitteln (10) geliefert wird.

6. Energieerzeugungssystem nach Anspruch 1, wobei die Mittel (10) zur Wiedergewinnung von Kohlendioxid Dampf verflüssigen, um den Dampf in ein Gas und eine Flüssigkeit zu separieren.

7. Energieerzeugungssystem nach Anspruch 6, wobei ein Fluid, das von den Verbrennungsmitteln (1) her geliefert wird und zu den Mitteln (10) zur Wiedergewinnung von Kohlendioxid geliefert wird, mittels des flüssigen Sauerstoffs, verflüssigten Kohlendioxids oder Wärme aus der Verdampfung des Brennstoffs oder Wassers gekühlt wird.

8. Energieerzeugungssystem nach Anspruch 1, wobei das Energieerzeugungsmittel (9) eine Gasturbine (5) und/oder eine Dampfturbine (8) beinhaltet.

9. Energieerzeugungssystem nach Anspruch 8, wobei ein zu der Dampfturbine (8) geliefertes Arbeitsfluid durch die Hitze eines Fluids erwärmt wird, das von den Verbrennungsmitteln (1) her geliefert wird.

10. Energieerzeugungssystem nach Anspruch 1, wobei Wasser oder Dampf den Verbrennungsmitteln (1) und/oder den Gaserzeugungsmitteln (4) zugeführt wird.

11. Energieerzeugungssystem nach Anspruch 1, wobei zumindest ein Teil des Wassers oder Dampfes, das bzw. der von den Mitteln (10) zur Wiedergewinnung von Kohlendioxid wiedergewonnen wird, den Verbrennungsmitteln (1) und/oder den Gaserzeugungsmitteln (4) zugeführt wird.

12. Energieerzeugungssystem nach Anspruch 11, wobei der Brennstoff, der den Gaserzeugungsmitteln (4) zugeführt wird, umgewandelt, zersetzt oder gasifiziert wird mittels der Wärme eines Fluids, das von den Verbrennungsmitteln (1) her geliefert wird.

13. Energieerzeugungssystem nach Anspruch 11, wobei der Brennstoff, der den Gaserzeugungsmitteln (4) zugeführt wird, umgeformt, neu zusammengesetzt oder gasifiziert wird mittels der Wärme eines Fluids, das von der Gasturbine (5) oder der Dampfturbine (8) extrahiert wird.

14. Energieerzeugungssystem nach Anspruch 1, wobei das von den Mitteln (10) wiedergewonnene Kohlendioxid den Gaserzeugungsmitteln (4) und/oder den Verbrennungsmitteln (1) zugeführt wird.

15. Energieerzeugungssystem nach Anspruch 1, weiter mit einem Kompressor (13) zum Komprimieren eines Fluids, das Kohlendioxid beinhaltet.

16. Energieerzeugungssystem nach Anspruch 15, wobei ein von dem Kompressor (13) ausgestoßenes Fluid zu den Verbrennungsmitteln (1) und/oder den Gaserzeugungsmitteln (4) geleitet wird.

17. Energieerzeugungssystem nach Anspruch 1, weiter mit einem Abschnitt (15) zum Verflüssigen von Kohlendioxid, zum Verflüssigen eines von den Mitteln (10) zur Widergewinnung von Kohlendioxid ausgestoßenen Fluids, das Kohlendioxid beinhaltet.

18. Energieerzeugungssystem nach Anspruch 17, weiter mit Mitteln zum Speichern von mittels des Abschnitts (15) verflüssigtem Kohlendioxid.

19. Energieerzeugungssystem nach Anspruch 18, wobei ein von den Verbrennungsmitteln (1) ausgestoßenes und den Mitteln (10) zur Wiedergewinnung von Kohlendioxid zugeführtes Fluid mittels des flüssigen Sauerstoffs, verflüssigten Kohlendioxids oder Wärme aus der Verdampfung des Brennstoffs oder Wassers gekühlt wird.

20. Energieerzeugungssystem nach Anspruch 1, weiter mit:

einem Abschnitt (18) zum Steuern einer Durchflussgeschwindigkeit eines Fluids, das ein Gas beinhaltet, das von den Gaserzeugungsmitteln (4) her geliefert und zu den Verbrennungsmitteln (1) befördert wird;

einem Abschnitt (19) zum Steuern einer Durchflussgeschwindigkeit von Sauerstoff, der in dem Fluid vorhanden ist, das den Verbrennungsmitteln (1) zugeführt wird, wobei dieses Fluid als eine Hauptkomponente Sauerstoff oder eine Verbindung beinhaltet, die Atome von Kohlenstoff, Wasserstoff oder Sauerstoff oder Kombinationen daraus aufweist; und

Steuermitteln (21) zum Steuern einer Durchflussgeschwindigkeit von Sauerstoff oder eines Brennstoffs, so dass diese der Durchflussgeschwindigkeit des Fluids entspricht, das das Gas oder den Sauerstoff beinhaltet.

21. Energieerzeugungssystem nach Anspruch 20, wobei die Steuermittel (21) den Abschnitt (18) zur Steuerung der Gasdurchflussgeschwindigkeit und den Abschnitt (19) zur Steuerung der Sauerstoff-Durchflussgeschwindigkeit so ansteuern, dass die Durchflussgeschwindigkeit des Sauerstoffs auf der Basis eines stöchiometrischen Mischverhältnisses von $(4_X + 1y + 2_Z)/4$ erhalten wird, wobei X, Y und Z ganze Zahlen sind, und zwar unter der Annahme, dass das Fluid, das ein Gas beinhaltet, CxHyOz ist.

**Revendications**

1. Système de production d'énergie comprenant :

un moyen de production de gaz (4) pour reformer, décomposer ou gazéifier un combustible pour générer un gaz contenant au moins de l'hydrogène ;
un moyen de combustion (1) pour recevoir et brûler un fluide contenant le gaz produit par le moyen de production de gaz et un fluide contenant en tant que composant principal, de l'oxygène ou un composé comprenant des atomes choisis dans le groupe consistant en des atomes de carbone, d'hydrogène ou d'oxygène et leurs associations ;
un moyen de production d'énergie (9) pour générer de l'électricité en utilisant un fluide produit par le moyen de combustion (1) ; et
un moyen de récupération de dioxyde de carbone (10) pour récupérer au moins une partie du dioxyde de carbone d'un fluide libéré par le moyen de production d'énergie (9),

dans lequel ledit combustible est un composé contenant du carbone ou de l'hydrogène, ledit combustible étant choisi dans le groupe consistant en le méthanol, l'éthanol, le méthane, l'éthane, le propane, le butane, l'éther diméthylique, l'éther diéthylique, le charbon, le monoxyde de carbone, l'acide formique et leurs mélanges,

**caractérisé en ce qu'**au moins une partie de l'eau ou de la vapeur récupérée par ledit moyen de récupération de dioxyde de carbone (10) est délivrée à une turbine à vapeur (8) constituant ledit moyen de production d'énergie (9).

2. Système de production d'énergie selon la revendication 1, dans lequel ledit oxygène contient au moins de l'oxygène obtenu en décomposant de l'eau ou en séparant de l'air.

3. Système de production d'énergie selon la revendication 1, dans lequel ledit oxygène est de l'oxygène liquide.

4. Système de production d'énergie selon la revendication 3, dans lequel un fluide fourni par ledit moyen de combustion (1) et délivré audit moyen de récupération de dioxyde de carbone (10) est refroidi par ledit oxygène liquide, le dioxyde de carbone liquéfié ou la chaleur de vaporisation dudit combustible ou de ladite eau.

5. Système de production d'énergie selon la revendication 1, dans lequel ledit fluide contenant le gaz fourni par le moyen de production de gaz (4) est mélangé audit fluide contenant, en tant que composant principal, de l'oxygène ou un composé contenant des atomes choisis dans le groupe consistant en des atomes de carbone, d'hydrogène et d'oxygène et les associations de ceux-ci, avant que ledit fluide soit alimenté dans ledit moyen de combustion (1).

6. Système de production d'énergie selon la revendication 1, dans lequel ledit moyen de récupération de dioxyde de carbone (10) liquéfie de la vapeur pour séparer la vapeur en un gaz et un liquide.

7. Système de production d'énergie selon la revendication 6, dans lequel un fluide produit par ledit moyen de combustion (1) et alimenté dans ledit moyen de récupération de dioxyde de carbone (10) est refroidi par lesdits oxygène liquide, dioxyde de carbone liquéfié ou chaleur de vaporisation dudit combustible ou de ladite eau.

8. Système de production d'énergie selon la revendication 1, dans lequel ledit moyen de production d'énergie (9) contient au moins l'une parmi une turbine à gaz (5) et une turbine à vapeur (8).

9. Système de production d'énergie selon la revendication 8, dans lequel un fluide de service alimenté dans ladite turbine à vapeur (8) est chauffé par la chaleur d'un fluide produit par ledit moyen de combustion (1).

10. Système de production d'énergie selon la revendication 1, dans lequel de l'eau ou de la vapeur est alimentée dans l'un quelconque parmi ledit moyen de combustion (1) et ledit moyen de génération de gaz (4).

11. Système de production d'énergie selon la revendication 1, dans lequel au moins une partie de l'eau ou de la vapeur récupérée par ledit moyen de récupération de dioxyde de carbone (10) est alimentée dans au moins l'un parmi ledit moyen de combustion (1) et ledit moyen de génération de gaz (4).

12. Système de production d'énergie selon la revendication 11, dans lequel ledit combustible alimenté dans ledit moyen de génération de gaz (4) est reformé, décomposé ou gazéifié par la chaleur d'un fluide délivré par ledit moyen de combustion (1).

13. Système de production d'énergie selon la revendication 11, dans lequel ledit combustible alimenté dans ledit moyen de génération de gaz (4) est reformé, recomposé ou gazéifié par la chaleur d'un fluide extrait de ladite turbine à gaz (5) ou de ladite turbine à vapeur (8).

14. Système de production d'énergie selon la revendication 1, dans lequel ledit dioxyde de carbone récupéré par ledit moyen de récupération de dioxyde de carbone (10) est alimenté dans au moins l'un parmi ledit moyen de génération de gaz (4) et ledit moyen de combustion (1).

15. Système de production d'énergie selon la revendication 1, comprenant en outre un compresseur (13) pour comprimer un fluide contenant du dioxyde de carbone.

16. Système de production d'énergie selon la revendication 15, dans lequel un fluide délivré par ledit compresseur (13) est alimenté dans au moins l'un parmi ledit moyen de combustion (1) et ledit moyen de génération de gaz (4).

17. Système de production d'énergie selon la revendication 1, comprenant en outre une section de liquéfaction de dioxyde de carbone (15) pour liquéfier un fluide contenant du dioxyde de carbone délivré par ledit moyen de récupération de dioxyde de carbone (10).

18. Système de production d'énergie selon la revendication 17, comprenant en outre un moyen de stockage de dioxyde de carbone pour stocker de dioxyde de carbone liquéfié par ladite section de liquéfaction de dioxyde de carbone (15).

19. Système de production d'énergie selon la revendication 18, dans lequel un fluide délivré par ledit moyen de combustion (1) et alimenté dans ledit moyen de récupération de dioxyde de carbone (10) est refroidi par lesdits oxygène liquide, dioxyde de carbone liquéfié ou chaleur de vaporisation dudit combustible ou de ladite eau.

20. Système de production d'énergie selon la revendication 1, comprenant en outre :

une section de commande du débit de gaz (18) pour commander un débit d'un fluide contenant un gaz délivré par ledit moyen de génération de gaz (4) et alimenté dans ledit moyen de combustion (1) ;
une section de commande de débit d'oxygène (19) pour commander un débit d'oxygène contenu dans ledit fluide alimenté dans ledit moyen de combustion (1), ledit fluide contenant, en tant que composant principal, de l'oxygène ou un composé contenant des atomes choisis dans le groupe consistant en des atomes de carbone, d'hydrogène et d'oxygène et une association de ceux-ci ; et
un moyen de commande (21) pour commander un débit d'oxygène ou d'un combustible de manière à correspondre audit débit dudit fluide contenant du gaz ou ledit oxygène.

21. Système de production d'énergie selon la revendication 20, dans lequel ledit moyen de commande (21) commande ladite section de commande de débit de gaz (18) et ladite section de contrôle de débit d'oxygène (19) de telle manière que ledit débit dudit oxygène est obtenu sur la base d'un rapport de mélange stoechiométrique de $(4x + 1y + 2z)/4$, où $x$, $y$ et $z$ sont des entiers, en supposant que ledit fluide contenant un gaz est $C_xH_yO_z$.

FIG.1

PRIOR ART

EP 0 831 205 B1

FIG.2

FIG.3

EP 0 831 205 B1

FIG.4

EP 0 831 205 B1

FIG.5

FIG.6A

O2 etc. ———→ **COMBUSTOR** `1` ———→ **EXHAUST-HEAT RECOVERY BOILER** `6` ———→ **STEAM TURBINE** `8`

H2 etc.

FUEL ———→ **GAS GENERATING MEANS** `4`

$H_2O, CO_2$

**CARBON DIOXIDE RECOVERY MEANS** `10` ———→ $CO_2$

↓ $H_2O$

**STEAM CONDENSER** `14`

## FIG.6B

**FIG.6C**

FIG.7

FIG.8A

26

FIG.8B

FIG.8C

FIG.8D

FIG.9A

FIG.9B

EP 0 831 205 B1

FIG.10

FIG.11A

FIG.11B

EP 0 831 205 B1

FIG.11C

EP 0 831 205 B1

FIG.12A

FIG.12B

FIG.12C

FIG.12D

FIG.13A

FIG.13B

EP 0 831 205 B1

FIG.13C

FIG.13D

EP 0 831 205 B1

EP 0 831 205 B1

FIG.14A

FIG.14B

EP 0 831 205 B1

FIG.14C

FIG.14D

FIG.15

FIG.16

FIG.17

EP 0 831 205 B1

FIG.18

EP 0 831 205 B1

FIG.19

EP 0 831 205 B1

FIG.20

FIG.21

FIG.22

EP 0 831 205 B1

FIG.23

FIG.24

FIG.25

EP 0 831 205 B1

FIG.26

EP 0 831 205 B1

START

DETERMINE TARGET OUTPUT — ST1

DETERMINE FEED RATES OF OXYGEN AND FUEL — ST2

DETERMINE AMOUNT OF WATER IN REFORMER — ST3

DETERMINE AMOUNT OF HYDROGEN GAS — ST4

ST9 — DECREASE AMOUNT OF CIRCULATED $CO_2$ OR $H_2O$

ST11 — INCREASE AMOUNT OF CIRCULATED $CO_2$ OR $H_2O$

ST5

$T_L < T_t < T_H$ ?

NO

$T_L > T_t$ ? — ST8

YES

NO

$T_t > T_H$ ? — ST10

YES

NO

YES

DETERMINE AMOUNT OF RECOVERED CARBON DIOXIDE — ST6

CONTROL VARIOUS VALVES BASED ON RECOVERED AMOUNT — ST7

END

FIG.27

55

FIG. 28

EP 0 831 205 B1